# EUROPEAN PATENT APPLICATION

(11) **EP 3 486 200 A1**
(43) Date of publication of application: **22.05.2019**
(21) Application number: 18206191.1
(22) Date of filing: 14.11.2018
(51) Int. Cl.: B65G 69/00

(54) **LOADING DOCK BUMPER**

(30) Priority: 16.11.2017 US 201762586980 P
(71) Applicant: Ideal Warehouse Innovations, Inc., Vaughan, Ontario L4L 8Z7 (CA)
(72) Inventor: DI BIASE, Joseph, Vaughan, Ontario L4L 8Z7 (CA)
(74) Representative: Haseltine Lake LLP

(57) **Abstract**

The present invention relates to a loading dock bumper (10) comprising a pair of side resilient components (20, 20'), each comprising an elongated portion comprising at least an outer face and an inner face, and a shortened portion or flange extending out from the outer face of the elongated portion, the shortened portion or flange for attaching to a supporting surface.

## Description

### FIELD

The present invention relates to the field of loading dock bumpers, and more particularly to loading dock bumpers for use in cushioning the impact of a vehicle, such as a transport truck or the like, against, and while it is positioned at, a loading dock.

### INTRODUCTION

For years, bias ply tires were in abundant supply in North America and used on most buses. It was the objective of the tire recycler to utilize as much of the bias ply tires as possible to reduce waste, which was heavy to move and costly to landfill. This helped stimulate the idea of using this strong scrap tire material in making laminated loading dock bumpers consisting of a plurality of strips from the thick tread arranged face-to-face in a stacked relationship, secured together at the two ends of the stack by a pair of angle brackets such that the rubber strips were directly exposed to the vehicle. Examples of such laminated loading dock bumpers are described in, for example, U.S. Patent Nos. 2649295, 3058738, 3063700, 3096973, 3165305, 3338206 and 3353812.

Bias ply tires are no longer manufactured in North America and most of the remaining bias ply tire subcomponent parts, such as rubber pads for laminated dock bumpers, now arrive to North America from India and China to the main producers of dock bumpers. Offshore supply of bias ply tire subcomponents is also dwindling quickly as radial tires, which have longer life and provide a smoother ride on modern roads, become more widespread. Due to the scarcity of bias ply tire rubber and the cost to collect this material in one area for processing, the cost of bias ply tire material for dock bumpers has greatly increased.

Using the tread of bias ply tire material to make a laminated dock bumper was an effective way to repurpose this strong material. However, the original purpose of this material was as a tire and not as a bumper and the design of this material was not engineered to accommodate the impact of docking trailers against a loading dock and the subsequent forces directed onto the building foundation. The design, instead was focused to re-purpose the tire tread rather than to engineer a dock bumper that would provide a shock/impact absorption solution at the loading dock. Therefore, the ability of bias ply tire material to absorb shock at a loading dock was not part of its original and intended design. In addition, bias ply tire rubber has a natural curve and therefore must be assembled in a press and piling the rubber onto the metal fixture can be very tedious and time consuming.

Molded dock bumpers, such as those described in, for example, U.S. Patent Nos. 3664075, have been used as replacements for laminated bumpers. Many molded bumpers are made by cutting, grinding, or shredding discarded tires into fragments, such as that described in, for example, U.S. Patent No. 5094905. The fragments are mixed with an adhesive and molded, preferably under pressure, into a desired shape which is then typically bolted directly to the loading dock through the face through a countersunk hole or is bonded to a suitable base plate, which in turn is bolted or otherwise connected to the loading dock. These methods of mounting may not allow for secure fastening and since many existing molded bumpers suffer from poor frictional properties, as a consequence, these bumpers are often torn off the loading dock or their associated bases after a certain period of use. In addition, molded bumpers do not have the nylon reinforcement found in scrap bias ply tires and therefore do not hold up well against abrasion. Producing molded bumpers to be as strong as laminated bumpers using bias ply tires is cost prohibitive vs. using scrap bias ply tires. Furthermore, with the single molded rubber configuration of molded bumpers, hundreds of molds are required to make molded dock bumpers in the hundreds of configurations needed.

Since the introduction of laminated and molded dock bumpers, loading docks have become much more active, loaded trailers are heavier and the abrasion from the pitching and rolling motion from forklift traffic in and out of the trailers as they are loaded and unloaded is more aggressive. The introduction of the air ride trailer has further compounded this abrasion on the face of dock bumpers and today, existing molded and laminated dock bumpers may not, in some circumstances, have sufficiently high abrasion-resistance, and wear out much more quickly than previously as the rubber face is literally "scraped" and worn off.

Attempts have been made to add plastic abrasion-resistant faces to molded dock bumpers; however, in some circumstances, the fastening methods may not be robust enough and these faces may fall, or be torn, off. In other circumstances, a single molded configuration is required.

To combat abrasion and premature wear of rubber bumpers made from tire rubber, steel face dock bumpers have been designed, such as those described in, for example, U.S. Patent Nos. 3014710, 5658633, 6120871, 7476433, 758943, 8181759 and 9745152 and U.S. Patent Application Publication Nos. 2007/0152389 and 20170217697 and the Dura-Soft Bumper™ provided by Durable Corporation and described in U.S. Design Patent No. D400145. The Dura-Soft Bumper™ is made by taking a long piece of tire rubber and looping it to create the looped portion, which loops create an air gap that is intended to act as a cushion. However, it has been found that such air gaps do not provide any real impact absorption and that this type of dock bumper is difficult to assemble and does not allow for a consistent projection, which may affect the dock leveler lip purchase on the rear of a trailer. In addition, the Dura-Soft Bumper™ is purportedly designed to help improve the shock felt by truck drivers, which is exactly the opposite of what a dock bumper needs to do.

Steel face dock bumpers may have additional faults. Like laminated bumpers, steel face dock bumpers are not an engineered solution to absorb the impact of vehicles; the concept being to install a metal face over the rubber to reduce the abrasion from the movement of the trailer as forklifts drive in and out during the loading/unloading operation, but which in many cases, may absorb even less shock than a standard laminated dock bumper and as such, the absorption issue has not been dealt with. In addition, the steel face may bend when impacted by a trailer, thus reducing the bumpers' ability to absorb impact away from the building foundation even more. Although the steel face dock bumper concept is that the steel face is a "floating design", it may not move very much, or at all, especially after it becomes bent. Furthermore, the absorption of a steel face bumper does not adhere to any set specification. Moreover, in the case of a laminated tire rubber and steel face dock bumper, in which a metal face is installed over the rubber, due to the curve in bias ply tire rubber, special machinery may be needed to press the rubber to construct a bumper, making the process, in some circumstances, tedious, time consuming and costly. Moreover, other designs have added a steel face to the molded dock bumper using threaded rod. This is an expensive process and may still not allow the dock bumper to be fastened securely to the building wall, i.e., it can't be welded.

Prior art laminated tire rubber, molded rubber and steel face loading dock bumpers may not absorb enough impact away from building foundations. As a result, foundations and dock leveler pits may become damaged resulting in expensive building repair.

### SUMMARY

It is an object of the present invention to overcome the disadvantages of prior art loading dock bumpers.

It is also an object of the present invention to provide an engineered modular loading dock bumper that is easy to assemble and that absorbs impact from trailers to reduce damage done to trailers, loading docks and buildings.

It is also an object of the present invention to provide a visual indicator of wear on the loading dock bumper using replaceable abrasion-resistant material.

In accordance with an aspect of the present invention, there is provided, a loading dock bumper comprising: a pair of side resilient components, each comprising an elongated portion comprising at least an outer face and an inner face, and a shortened portion or flange extending out from the outer face of the elongated portion; a pair of side brackets, each comprising a first surface and a second surface, the first surface for attaching to the supporting surface, the second surface for abutting the shortened portion of each side resilient component; a pair of abrasion-resistant components shaped to fit within each space created between each second surface and each shortened portion or flange of each side resilient component; and at least one connecting member extending through at least one aperture in each of the pair of side brackets, the pair of side resilient components, and the abrasion-resistant components, thereby connecting and retaining the arranged pair of side resilient components, and the abrasion-resistant components, to the pair of side brackets as an integral unit.

In an embodiment of the present invention, the side resilient components are symmetrical in a vertical direction, allowing them to be invertible.

In an embodiment of the present invention, the abrasion-resistant components are symmetrical in a vertical direction, allowing them to be invertible and are symmetrical in the horizontal direction, allowing them to be rotatable by 90°.

In an embodiment of the present invention, the side resilient components are substantially L-shaped.

In an embodiment of the present invention, the shortened portions or flanges of each of the side resilient components have an outer chamfered face and an inner chamfered face.

In an embodiment of the present invention, the side resilient components are substantially J-shaped.

In an embodiment of the present invention, the pair of side resilient components are combined into a single side resilient component.

In an embodiment of the present invention, the single side resilient component is substantially T-shaped.

In an embodiment of the present invention, the apertures in the side resilient components and the abrasion-resistant components are slotted.

In an embodiment of the present invention, the dock bumper further comprises at least one supplemental component arranged between the supporting surface and the side resilient components.

In an embodiment of the present invention, the at least one supplemental component is a plurality of supplemental components.

In an embodiment of the present invention, the at least one supplemental component has slotted apertures to accommodate the connecting member.

In an embodiment of the present invention, the dock bumper further comprises at least one center resilient component comprising at least two faces, the at least one center resilient component arranged between the pair of side resilient components such that each face of the at least one center resilient component abuts the outer face of the elongated portion of each side resilient component and wherein the at least one connecting member extends through at least one aperture in the at least one center resilient component, thereby connecting the at least one center resilient component to the pair of side brackets.

In an embodiment of the present invention, recesses are formed in each of the inner faces of the pair of side resilient components and the at least two faces of the at least one center resilient component, such that when the at least one center resilient component abuts each of the pair of side resilient components, the recesses are aligned.

In an embodiment of the present invention, the at least one center resilient component is a plurality of center resilient components stacked face-to-face.

In an embodiment of the present invention, the at least one center resilient component is a first pair of center resilient components.

In an embodiment of the present invention, the dock bumper further comprises a second pair of side resilient components arranged between the first pair of center resilient components and a second pair of abrasion-resistant components arranged to fit within each space created between the each of the first pair of center resilient components and each outer face of the elongated portion of each of the second pair of side resilient components.

In an embodiment of the present invention, the dock bumper further comprises a second pair of center resilient components arranged between the second pair of side resilient components.

In an embodiment of the present invention, the at least one center resilient component is symmetrical in a vertical direction, allowing it to be invertible and is symmetrical in the horizontal direction, allowing it to be rotatable by 180°.

In an embodiment of the present invention, the apertures in the side resilient components, the at least one center resilient component, and the abrasion-resistant components are slotted.

In an embodiment of the present invention, the dock bumper further comprises at least one supplemental component arranged between the supporting surface and the side resilient components and the at least one center resilient component.

In an embodiment of the present invention, the at least one supplemental component is a plurality of supplemental components.

In an embodiment of the present invention, the at least one supplemental component has slotted apertures to accommodate the connecting member.

In an embodiment of the present invention, the pair of side resilient components are molded from molded rubber.

In an embodiment of the present invention, the pair of side resilient components and the at least one center resilient component is made from molded rubber.

In an embodiment of the present invention, the molded rubber is selected from the group consisting of styrene-butadiene rubber, neoprene rubber, butyl rubber, and natural rubber.

In an embodiment of the present invention, the pair of abrasion-resistant components are made from any material known to persons skilled in this art to provide abrasion- or wear-resistance.

In an embodiment of the present invention, the pair of abrasion-resistant components may be made from any material known to persons skilled in this art to be more abrasion- or wear-resistant than the material from which the resilient components are made.

In an embodiment of the present invention, the pair of abrasion-resistant components are made from high strength abrasion- or wear-resistant material.

In an embodiment of the present invention, the high strength abrasion- or wear-resistant material is selected from the group consisting of rubber, plastic and metal.

In an embodiment of the present invention, when the high strength abrasion- or wear-resistant material is rubber, the rubber is bias ply tire rubber material. In another embodiment of the present invention, the bias ply tire rubber material is in the form of a plurality of rubber pads arranged face-to-face in a stacked relationship.

In an embodiment of the present invention, the plastic is selected from the group consisting of polyvinylchloride, polyethylene and polyamide (Nylon™) and the metal is steel.

In an embodiment of the present invention, the polyethylene is selected from the group consisting of low density polyethylene (LDPE), high-density polyethylene (HDPE), cross-linked polyethylene and ultra-high molecular weight (UHMW) polyethylene and the polyamide is vinyl-impregnated polyamide.

In an embodiment of the present invention, the pair of side brackets are made from steel.

In accordance with another aspect of the present invention, there is provided a loading dock bumper comprising a pair of side resilient components, each comprising an elongated portion comprising at least an outer face and an inner face, and a shortened portion or flange extending out from the outer face of the elongated portion, the shortened portion or flange for attaching to a supporting surface and at least one connecting member extending through at least one aperture in each of the pair of side resilient components, thereby connecting and retaining the arranged pair of side resilient components as an integral unit.

In an embodiment of the present invention, the side resilient components are symmetrical in a vertical direction, allowing them to be invertible.

In an embodiment of the present invention, the side resilient components are substantially L-shaped.

In an embodiment of the present invention, the shortened portions or flanges of each of the side resilient components have an outer chamfered face and an inner chamfered face.

In an embodiment of the present invention, the side resilient components are substantially J-shaped.

In an embodiment of the present invention, the pair of side resilient components are combined into a single side resilient component.

In an embodiment of the present invention, the pair of substantially J-shaped components are combined into a single substantially T-shaped component.

In an embodiment of the present invention, the apertures in the side resilient components are slotted.

In an embodiment of the present invention, the dock bumper further comprises at least one supplemental component arranged between the supporting surface and the side resilient components.

In an embodiment of the present invention, the at least one supplemental component is a plurality of supplemental components.

In an embodiment of the present invention, the at least one supplemental component has slotted apertures to accommodate the connecting member.

In an embodiment of the present invention, the dock bumper further comprises at least one center resilient component comprising at least two faces, the at least one center resilient component arranged between the pair of side resilient components such that each face of the at least one center resilient component abuts the outer face of the elongated portion of each side resilient component and wherein the at least one connecting member extends through at least one aperture in the at least one center resilient component, thereby connecting the at least one center resilient component to the pair of side resilient components.

In an embodiment of the present invention, recesses are formed in each of the inner faces of the pair of side resilient components and the at least two faces of the at least one center resilient component, such that when the at least one center resilient component abuts each of the pair of side resilient components, the recesses are aligned.

In an embodiment of the present invention, the at least one center resilient component is a plurality of center resilient components stacked face-to-face.

In an embodiment of the present invention, the at least one center resilient component is a first pair of center resilient components.

In an embodiment of the present invention, the at least one center resilient component is symmetrical in a vertical direction, allowing it to be invertible and is symmetrical in the horizontal direction, allowing it to be rotatable by 180°.

In an embodiment of the present invention, the apertures in the side resilient components and the at least one center resilient component are slotted.

In an embodiment of the present invention, the dock bumper further comprises at least one supplemental component arranged between the supporting surface and the side resilient components and the at least one center resilient component.

In an embodiment of the present invention, the at least one supplemental component is a plurality of supplemental components.

In an embodiment of the present invention, the at least one supplemental component has slotted apertures to accommodate the connecting member.

In an embodiment of the present invention, the pair of side resilient components are molded from molded rubber.

In an embodiment of the present invention, the pair of side resilient components and the at least one center resilient component is made from molded rubber.

In an embodiment of the present invention, the molded rubber is selected from the group consisting of styrene-butadiene rubber, neoprene rubber, butyl rubber, and natural rubber.

In an embodiment of the present invention, the dock bumper further comprises a pair of abrasion-resistant components, each comprising at least an outer face and an inner face and arranged such that the inner face abuts the outer face of the elongated portion of each side resilient component and fits within the space created by each shortened portion or flange of each side resilient component and wherein the at least one connecting member extends through at least one aperture in the pair of abrasion-resistant components, thereby connecting the pair of abrasion-resistant components to the pair of side resilient components.

In an embodiment of the present invention, the at least one aperture in the pair of abrasion-resistant components is slotted.

In an embodiment of the present invention, the dock bumper further comprises a second pair of side resilient components arranged between the first pair of center resilient components and a second pair of abrasion-resistant components arranged to fit within each space created between the each of the first pair of center resilient components and each outer face of the elongated portion of each of the second pair of side resilient components.

In an embodiment of the present invention, the dock bumper further comprises a second pair of center resilient components arranged between the second pair of side resilient components.

In an embodiment of the present invention, the pair of abrasion-resistant components are made from any material known to persons skilled in this art to provide abrasion- or wear-resistance.

In an embodiment of the present invention, the pair of abrasion-resistant components may be made from any material known to persons skilled in this art to be more abrasion- or wear-resistant than the material from which the resilient components are made.

In an embodiment of the present invention, the pair of abrasion-resistant components are made from high strength abrasion- or wear-resistant material.

In an embodiment of the present invention, the high strength abrasion- or wear-resistant material is selected from the group consisting of rubber, plastic and steel.

In an embodiment of the present invention, when the high strength abrasion- or wear-resistant material is rubber, the rubber is bias ply tire rubber material. In another embodiment of the present invention, the bias ply tire rubber material is in the form of a plurality of rubber pads arranged face-to-face in a stacked relationship.

In an embodiment of the present invention, the plastic is selected from the group consisting of polyvinylchloride, polyethylene and polyamide (Nylon™) and the metal is steel.

In an embodiment of the present invention, the polyethylene is selected from the group consisting of low density polyethylene (LDPE), high-density polyethylene (HDPE), cross-linked polyethylene and ultra-high molecular weight (UHMW) polyethylene and the polyamide is vinyl-impregnated polyamide.

In an embodiment of the present invention, the shortened portion or flange of each elongated portion comprises apertures for receiving anchors there through for attaching the bumper to the supporting surface.

The present invention provides engineered loading dock bumpers that absorb impact and forces from docking trailers, thus preserving building foundations.

The present invention provides modular loading dock bumpers that allow for hundreds of size configurations to be assembled using relatively few components.

The loading dock bumpers, in accordance with embodiments of the present invention, utilize specifically engineered components so that specifications of these components can be determined, and adhered to, once tested.

The loading dock bumpers, in accordance with embodiments of the present invention, allow for the use of different durometers (hardness) of resilient material, which may be required to maximize absorption in specific loading dock applications such as decline, incline and level approaches to docks.

The modular design of the loading dock bumpers, in accordance with embodiments of the present invention, slips on the metal fixtures easily and quickly without the need to use a press.

The present invention provides modular loading dock bumpers that can be secured to the building wall by either fasteners or welding without the need for additional weld plates, such as is the case for a standard prior art molded loading dock bumper.

The loading dock bumpers, in accordance with embodiments of the present invention, allow for the installation of abrasion-resistant material that protects the impact absorption resilient material, which abrasion-resistant material can be replaced when needed without the need to replace the impact absorbing resilient material, therefore reducing bumper replacement cost.

The loading dock bumpers, in accordance with embodiments of the present invention, enable the abrasion-resistant material to reduce contact and friction against the engineered impact absorbing resilient material and to act as a visual wear indicator, informing the end user when to replace the abrasion-resistant material, impact absorbing resilient material or the entire bumper. The abrasion-resistant material protects the molded resilient components from abrasion. Because of the abrasion-resistant material, which can be of various thicknesses, and because of the through-bolt mounting method, the loading dock bumpers of the present invention will not fall or be torn off the loading dock. Depending on the loading dock application, the loading dock bumpers comprising abrasion-resistant material of the present invention can be mounted in a variety of different locations on the loading dock or offered as standard models taking dock height, width of dock leveler, width of door and the incline or decline of the loading dock ramp into consideration as the criteria to specifically provide the proper bumper with the properly located abrasion-resistant material to suit the specific application.

The loading dock bumpers, in accordance with embodiments of the present invention, utilize abrasion-resistant components as a device that may contact a switch installed behind the unit (the molded component may be molded with an exact space to accommodate an appropriate switch) to provide a number of different signals, for example, to indicate to a dock attendant that a trailer is docked/undocked.

The loading dock bumpers, in accordance with embodiments of the present invention, do not incorporate an abrasion-resistant material across the entire face of the bumper but rather in appropriate locations, thus reducing cost and allowing for more exact absorption specifications and easy replacement.

The modular design of the loading dock bumpers, in accordance with embodiments of the present invention, allows the most favorable bumper configuration to be constructed based on the application required with abrasion-resistant components installed where needed.

The abrasion-resistant material of the loading dock bumpers in accordance with embodiments of the present invention, serves as an aiming stripe to guide the driver of the tractor trailer when reversing and docking at the loading dock.

The abrasion-resistant components of the loading dock bumpers, in accordance with embodiments of the present invention, can also be used to activate a proximity switch set behind the components so as to identify when a trailer has docked or departed and/or to activate or allow other equipment to be activated (opening of doors only when the vehicle is in place or activating the dock leveler only when trailer is in place and the vehicle restraint engaged.

The loading dock bumpers, in accordance with embodiments of the present invention, allow for the placement of small sections of abrasion-resistant material in strategic locations, which requires less costly high abrasion-resistant material but at the same time improves protection to the loading dock bumper and the loading dock.

The slotted apertures in the molded resilient components and abrasion-resistant components of the loading dock bumpers, in accordance with embodiments of the present invention, reduce and/or prevent pressure or impact forces to impact the tie rods when impacted by docking trailers.

The loading dock bumpers in accordance with embodiments of the present invention, may require only two molded resilient components and one abrasion-resistant component, allowing hundreds of sizes to be made from only these relatively few components. Because of the relatively few components needed, less inventory is required and local assembly is easier. Less equipment is also required, i.e., no need for hydraulic presses.

With the loading dock bumpers, in accordance with embodiments of the present invention, the abrasion-resistant material, for example, colored, for example, bright yellow and/or reflective, abrasion-resistant material, may be placed in any location along the bumper width and height depending on the application or protection required. Because only a small section of abrasion-resistant material is required to be placed in specific locations, it is less costly than adding a full abrasion-resistant face on the bumper.

With the loading dock bumpers, in accordance with embodiments of the present invention, the resilient components are made with specific cut outs to reduce outward pressure against the outside rigid brackets, which may be angled metal or flat plate metal, which helps extend life of the bumper. Tire rubber expands when impacted and prior art laminated and molded bumpers do not reduce this outward pressure which causes damage to the outside brackets.

These and other features and advantages of the loading dock bumpers of the present invention are set forth herein and would be understood by persons skilled in the art.

### BRIEF DESCRIPTION OF THE DRAWINGS

The skilled person in the art will understand that the drawings, described below, are for illustration purposes only. The drawings are not intended to limit the scope of the Applicant's teachings in any way.
Figure 1 is a front perspective view of an embodiment of a loading dock bumper in accordance with the present invention.
Figure 2 is a rear perspective view of the loading dock bumper of Figure 1.
Figure 3 is a front view of the loading dock bumper of Figure 1.
Figure 4 is a cross-sectional view of the loading dock bumper of Figure 1 taken along A-A of Figure 3.
Figure 5 is a rear perspective view of the loading dock bumper of Figure 1 with a side resilient component and a center component greyed out.
Figure 6 is a front right-hand side perspective view of a center resilient component of the loading dock bumper of Figure 1.
Figure 7 is an inverted rear left-hand perspective view of the center resilient component of Figure 6.
Figure 8 is a front perspective view of a side resilient component of the loading dock bumper of Figure 1.
Figure 9 shows a partial side view of an abrasion-resistant component of the loading dock bumper of Figure 1.
Figure 10 is a front perspective view of another embodiment of a loading dock bumper in accordance with the present invention.
Figure 11 is a front perspective view of another embodiment of a loading dock bumper in accordance with the present invention.
Figure 12 is a front perspective view of another embodiment of a loading dock bumper in accordance with the present invention.
Figure 13 is a front perspective view of another embodiment of a loading dock bumper in accordance with the present invention.
Figure 14 is a front perspective view of another embodiment of a loading dock bumper in accordance with the present invention.
Figure 15 is a top view of the loading dock bumper of Figure 14.
Figure 16 is a side view of the loading dock bumper of Figure 14.
Figure 17 is a front perspective view of another embodiment of a loading dock bumper in accordance with the present invention.
Figure 18 is a top view of the loading dock bumper of Figure 17.
Figure 19 is a side view of the loading dock bumper of Figure 17.
Figure 20 is a front perspective view of another embodiment of a loading docking bumper in accordance with the present invention.
Figure 21 is a top view of the load docking bumper of Figure 20.
Figure 22 is a side view of the loading dock bumper of Figure 20.
Figure 23 is a photograph of another embodiment of a loading dock bumper in accordance with the present invention.

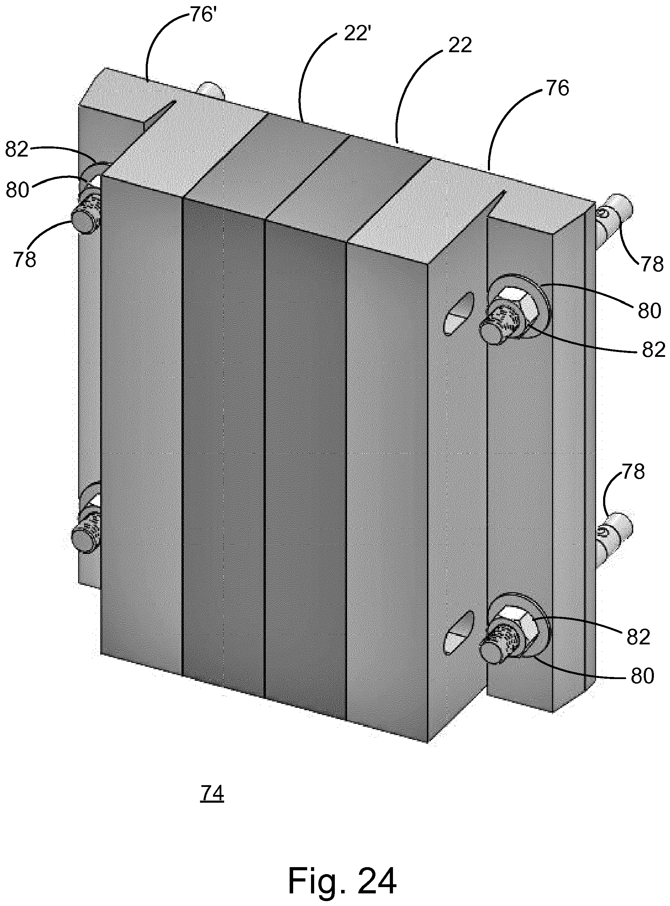

Figure 24 is a front perspective view of the load docking bumper of Figure 23.

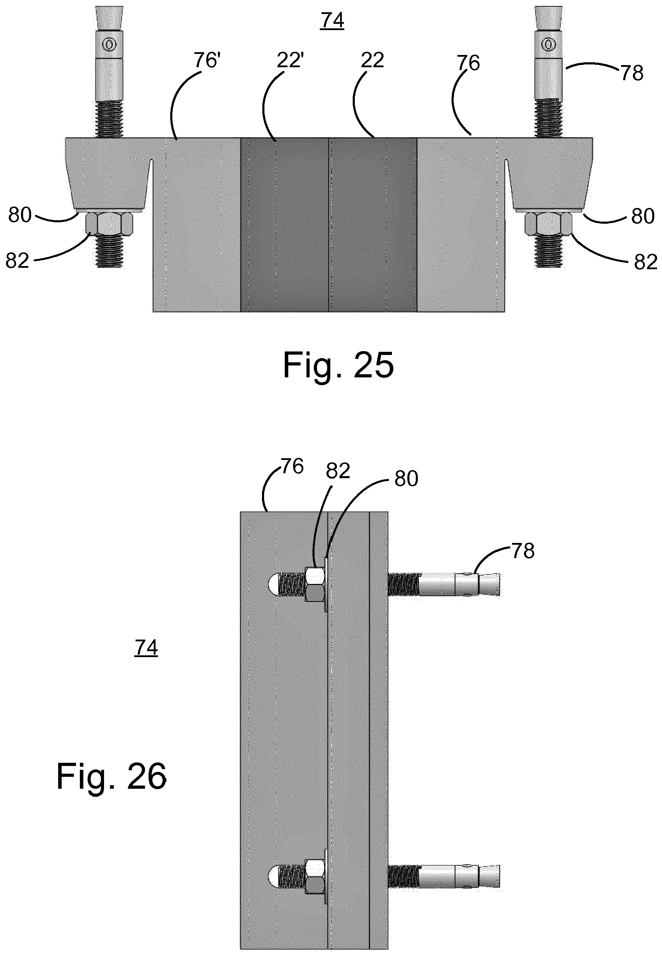

Figure 25 is a top view of the load docking bumper of Figure 24.
Figure 26 is a side view of the loading dock bumper of Figure 24.

In the drawings, like reference numerals indicate like parts.

### DESCRIPTION OF VARIOUS EMBODIMENTS

It should be understood that the phrase "a" or "an" used in conjunction with the applicant's teachings with reference to various elements encompasses "one or more" or "at least one" unless the context clearly indicates otherwise.

The term "modular" as used herein would be understood to mean that the loading dock bumper of the present invention may be composed of a plurality of components which may be standardized in a variety of different sizes, shapes and configurations, may be interchanged with others like it and may be flexibly arranged in a variety of different ways and configurations, including in sections, for easy construction to create a variety of different sizes, shapes, designs and configurations of loading dock bumpers, including different lengths, widths, heights and depths. For example, the loading dock bumpers of the present invention may provide projections of, for example, but not limited to, from about 4" to about 12", vertical protection from, for example, but not limited to, from about 6" to about 36", and horizontal protection from, for example, but not limited to, about 12" to about 10'4".

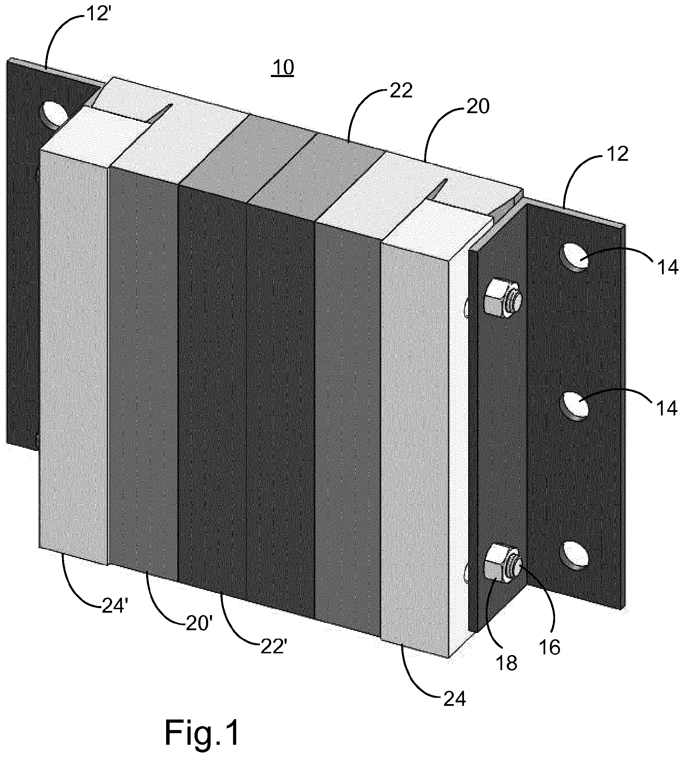

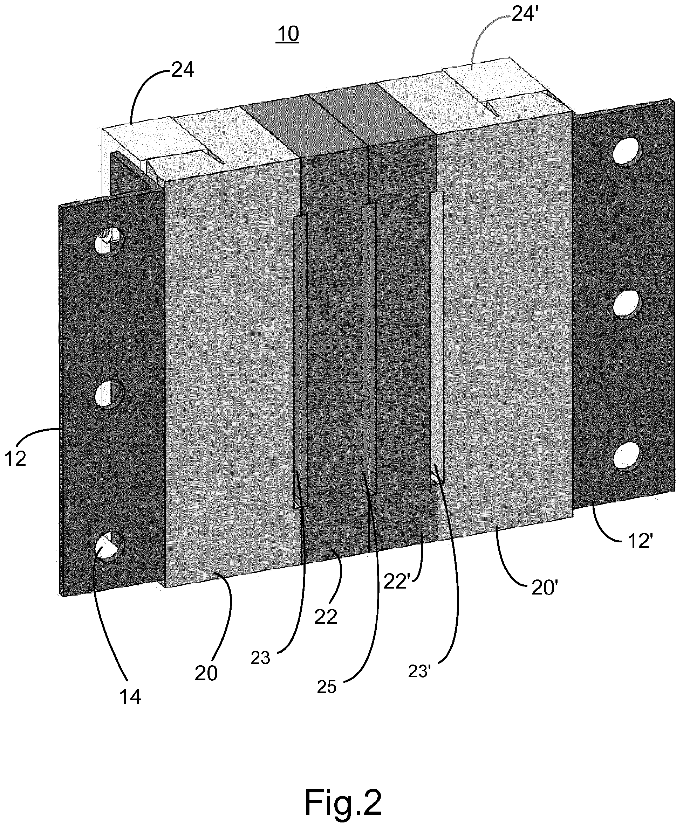

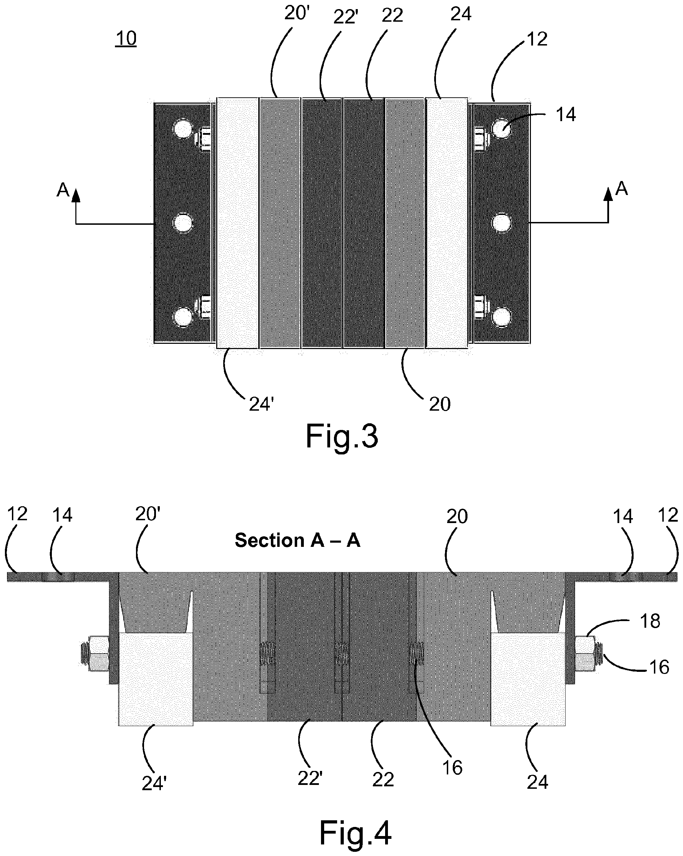

Reference is first made to Figures 1 to 9 which show an exemplary modular loading dock bumper, and components thereof, in accordance with an embodiment of the present invention. Figure 1 which shows a front perspective view of the exemplary modular loading dock bumper which is generally referenced by the numeral 10. In this example, and as seen in other views in Figures 2, 3, 4, and 5, the bumper 10 is constructed such that modular resilient components 20, 22, 20', 22', and modular abrasion-resistant components 24, 24' are stacked between side brackets 12, 12'.

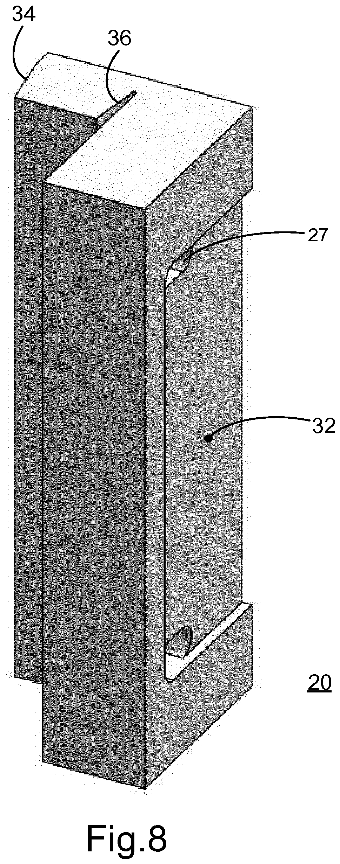

In this embodiment, side resilient components 20, 20' have elongated portions having opposing front and rear ends with opposing front and rear faces, respectively, opposing left-hand and right-hand sides with opposing left-hand and right-hand side faces, respectively, and opposing top and bottom ends with opposing top and bottom end faces, respectively. Side resilient components 20, 20' also have shortened portions or flanges extending from the right-hand and left-hand sides, respectively, of the elongated portions, at the rear ends thereof. The shortened portions or flanges have opposing top and bottom ends with opposing top and bottom end faces, respectively and opposing front and rear ends with opposing front and rear faces, respectively, which rear ends with rear faces are commonly shared with the rear ends with rear faces of the elongated portions. Only the rear ends of the shortened portions or flanges of side resilient components 20, 20', and not the front ends, are connected, by spanning portions, to the right-hand and left-hand sides, respectively, of the elongated portions, i.e., there are partial gaps or notches, in this embodiment, created by chamfers, between the shortened portions or flanges and the elongated portions, extending partially rearward from the front ends of the shortened portions or flanges toward the rear ends thereof and separating the front ends thereof, from the elongated portions. Accordingly, the shortened portions or flanges have opposing left-hand and right-hand sides with opposing left-hand and right-hand side faces, respectively. The opposing left-hand and right-hand sides of the shortened portions of side resilient components 20, 20' are chamfered (as shown in Figure 8 with sides 34 and 36 of side resilient component 20), for example, but not limited to, a 45° angled chamfer, and the rear ends of the shortened portions are connected to the respective sides of the elongated portions by spanning portions. As such, side resilient components 20, 20' are substantially J-shaped.

In another embodiment, side resilient components 20, 20' may be substantially L-shaped (not shown) rather than substantially J-shaped. When side resilient components 20, 20' are substantially L-shaped, the entirety of the shortened portions or flanges extend from, and are connected to, the sides of the elongated portions and they are not partially separated therefrom, i.e., there are no partial gaps or notches between the shortened portions or flanges and the elongated portions. For example, in this embodiment, with respect to side resilient components 20, 20', there are no sides 36, 36'. In still another embodiment, sides 34, 34' of side resilient components 20, 20', are not chamfered.

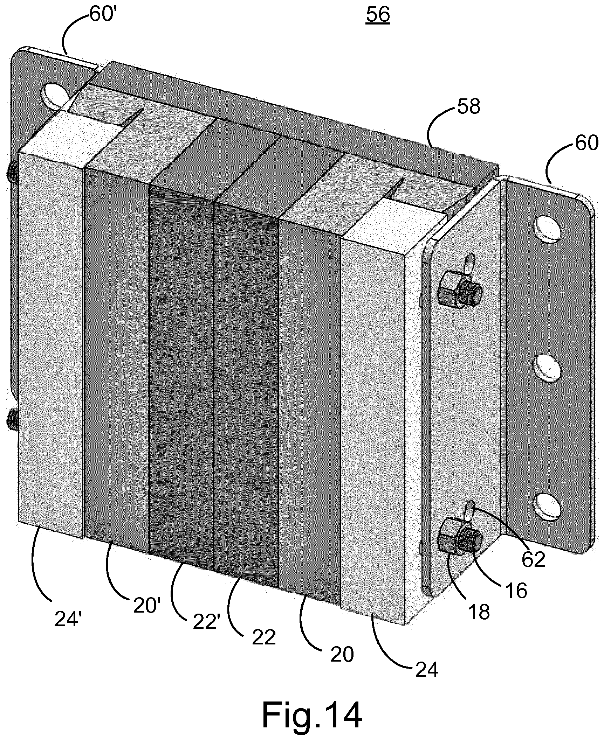

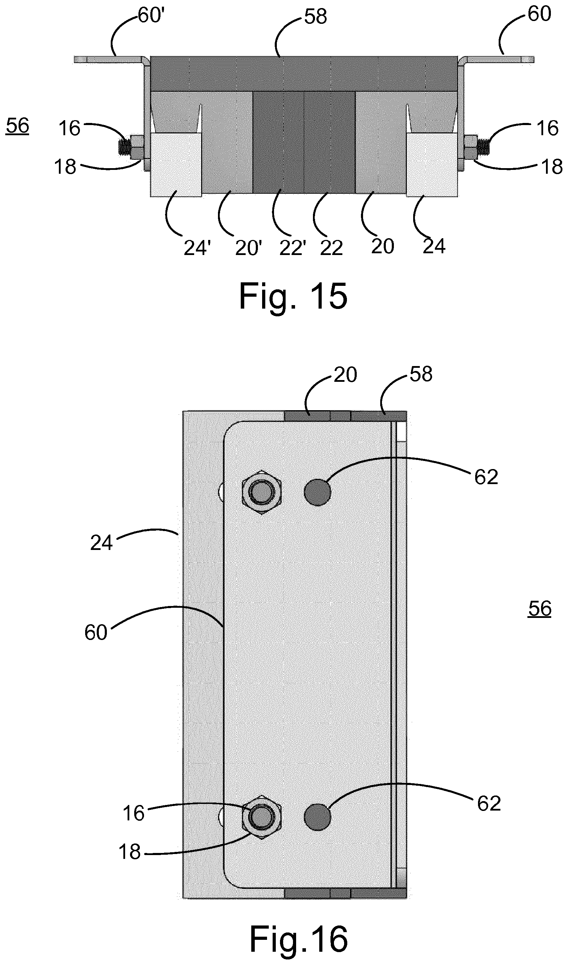

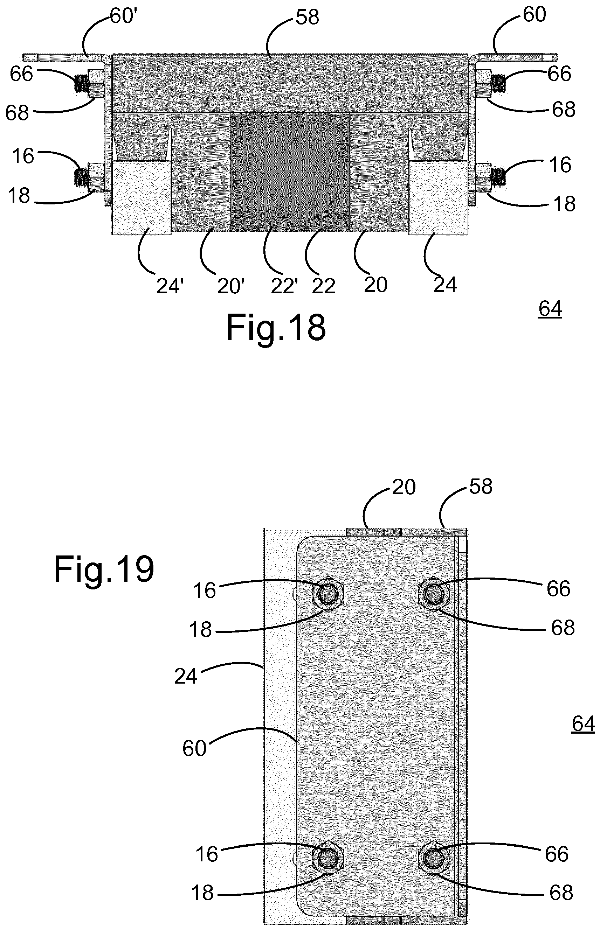

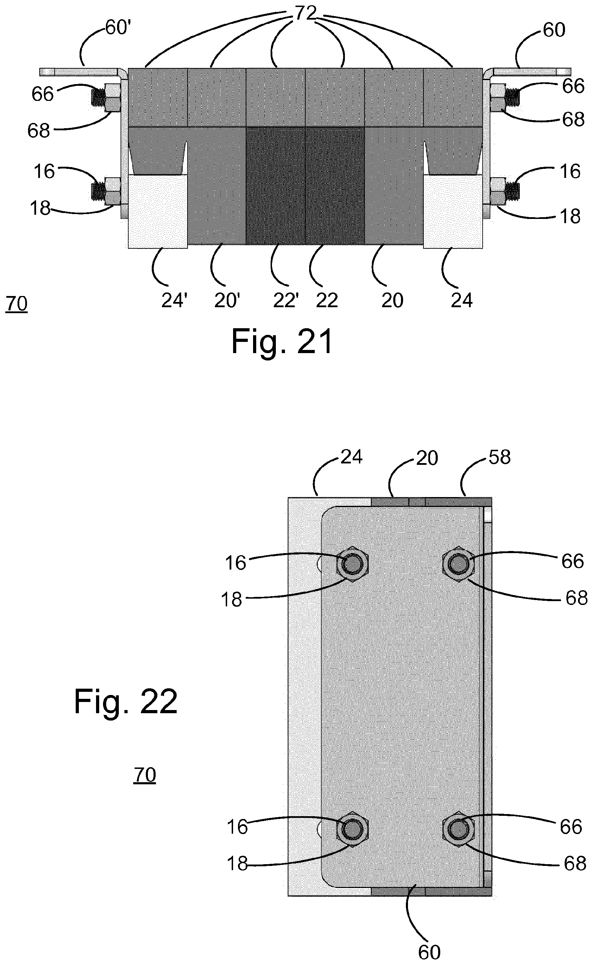

In the embodiment illustrated in Figures 1 to 9, the front faces of the elongated portions of side resilient components 20, 20' are impact absorbing faces adapted for direct contact with the rear frame or bumper of a vehicle. The rear faces of side resilient components 20, 20', which faces are commonly shared by the elongated and shortened portions or flanges, are abutting faces adapted for direct contact with a surface, such as for example, but not limited to, the loading dock wall, a metal mounting plate or a supplemental component (see the embodiments shown in Figures 14-22). The frontfaces of the shortened portions orflanges of side resilient components 20, 20' are, in this embodiment, abutting faces adapted for direct contact with the rear faces of abrasion-resistant components 24, 24', respectively. The left-hand side face of the elongated portion of side resilient component 20 and the right-hand side face of the elongated portion of side resilient component 20' are abutting faces adapted for direct contact with, for example, but not limited to, another resilient component, such as the right-hand side face of side resilient component 20' or 22', respectively and the left-hand side face of side resilient component 20 or 22, respectively. The right-hand side face of the elongated portion of side resilient component 20 and the left-hand side face of the elongated portion of side resilient component 20' are, in this embodiment, abutting faces adapted for direct contact with, for example, but not limited to, the left-hand side face of abrasion-resistant component 24 and the right-hand side face of abrasion-resistant component 24', respectively. The right-hand side face of the shortened portion or flange of side resilient component 20 and the left-hand side face of the shortened portion orflange of side resilient component 20' are, in this embodiment, abutting faces adapted for direct contact with the abutting faces of side brackets 12, 12', respectively.

In this embodiment, side resilient components 20, 20' are vertically symmetrical and are symmetrical with respect to the top and bottom end faces, and as such, are invertible by 180°, i.e., the top and bottom end faces can be interchanged with each other, and reversible or rotatable by 180°, i.e., side resilient component 20 can be used on the left-hand side of bumper 10 as side resilient component 20' and side resilient component 20' can be used on the right-hand side of bumper 10 as side resilient component 20.

In this embodiment, the elongated portions of side resilient components 20, 20' are substantially in the shape of a rectangular cuboid with a substantially rectangular cross-section. In this embodiment wherein side resilient components 20, 20' are substantially J-shaped, the shortened portions or flanges are substantially in the shape of a square cuboid with a substantially square cross-section but for the chamfering on the sides thereof. In the embodiment wherein side resilient components 20, 20' are substantially L-shaped (not shown), the shortened portions or flanges are substantially in the shape of a square cuboid with a substantially square cross-section.

In the embodiment shown in Figures 1 to 9, center resilient components 22, 22' have opposing front and rear ends with opposing front and rear faces, respectively, opposing left-hand and right-hand sides with opposing left-hand and right-hand side faces, and opposing top and bottom ends with opposing top and bottom end faces. The front faces of center resilient components 22, 22' are impact absorbing faces adapted for direct contact with the rear frame or bumper of a vehicle. The rearfaces of center resilient components 22, 22' are adapted for direct contact with a surface, for example, but not limited to, the loading dock wall, a metal mounting plate or another resilient component (see Figures 14-22). The opposing left-hand and right-hand side faces of center resilient components 22, 22' are abutting faces adapted for direct contact with the right-hand and left-hand side faces of additional center resilient components 22', 22, respectively or the right-hand side face of the elongate portion of side resilient component 20' and the left-hand side face of the elongate portion of side resilient component 20, respectively.

In this embodiment, center resilient components 22, 22' are symmetrical with respect to the opposing front and rear faces, are symmetrical with respect to the opposing left-hand and right-hand side faces and are symmetrical with respect to the opposing top and bottom end faces, and as such, center resilient components 22, 22' may be reversible or rotatable by 180°, i.e., the opposing front and rear faces may be interchanged with each other and the opposing left-hand and right-hand side faces may be interchanged with each other, and may be invertible by 180°, i.e., the opposing top and bottom end faces may be interchanged with each other. Accordingly, in this embodiment, the rear faces of center resilient components 22, 22' may also act as impact absorbing faces adapted for direct contact with the rear frame or bumper of a vehicle and the front faces of center resilient components 22, 22' may also act as abutting faces adapted for direct contact with a surface. In this embodiment, center resilient components 22, 22' are substantially in the shape of a rectangular cuboid with a substantially rectangular cross-section.

In this embodiment, abrasion-resistant components 24, 24' have opposing front and rear ends with opposing front and rear faces, respectively, opposing left-hand and right-hand sides with opposing left-hand and right-hand side faces, and opposing top and bottom ends with opposing top and bottom end faces. The front faces of abrasion-resistant components 24, 24' are abrasion-resistant faces adapted for direct contact with the rear frame or bumper of a vehicle. In some embodiments, depending on the material of which abrasion-resistant components 24, 24' are composed, the front faces may also be impact absorbing faces. The rear faces of abrasion-resistant components 24, 24' are abutting faces and are adapted for direct contact with the front faces of the shortened portions or flanges of side resilient components 20, 20'. The opposing left-hand and right hand faces of abrasion-resistant component 24 are abutting faces adapted for direct contact with the right-hand face of the elongated portion of side resilient component 20 and, in this embodiment, direct contact with the abutting face of side bracket 12, respectively. The opposing left-hand and right hand faces of abrasion-resistant component 24' are abutting faces adapted for direct contact with the left-hand face of the elongated portion of side resilient component 20' and, in this embodiment, direct contact with the abutting face of side bracket 12'.

In this embodiment, abrasion-resistant components 24, 24' are symmetrical with respect to the front, rear, left-hand side and right-hand side faces and are symmetrical with respect to the top and bottom end faces, and as such, abrasion-resistant components 24, 24' are rotatable by 360° in 90° increments, i.e., the front, rear, left-hand side and right-hand side faces can be interchanged with each other, and are invertible by 180°, i.e., the top and bottom end faces can be interchanged with each other. Accordingly, in this embodiment, each of the front, rear, left-hand side and right-hand side faces may be abutting faces, abrasion-resistant faces and, depending on the material, impact absorbing faces. In this embodiment, abrasion-resistant components 24, 24' are substantially in the shape of a square cuboid with a substantially square cross-section.

In this embodiment, the outer facing side faces of shortened portions or flanges of side resilient components 20, 20', abut the abutting surfaces of side brackets 12, 12', respectively. Abrasion-resistant components 24, 24' sit on top of the shortened portions or flanges of side resilient components 20, 20', respectively and fit within the spaces created between the elongated portions of side resilient components 20, 20' and the side brackets 12, 12', respectively; the sides of the abrasion-resistant components 24, 24' abutting the sides of the elongated portions of side resilient components 20, 20', respectively on one side and the abutting surfaces of side brackets 12, 12', respectively on the other side. Center resilient components 22, 22' are stacked on either side of the side resilient components 20, 20', respectively, the sides of the center resilient components 22, 22' abutting the sides of the other center resilient component on one side and the sides of the elongated portions of side resilient components 20, 20', respectively on the other side. All resilient components 20, 22, 20', 22 and abrasion-resistant components 24, 24' are stacked such that their front faces project past the front edges of the side brackets 12, 12' as seen in Figures 1, 2, 4 and 5 and all resilient components 20, 22, 20', 22' are stacked, in this embodiment, such that their rear faces are flush with the rear edges of the side brackets 12, 12' as seen in Figure 2. Abrasion-resistant components 24, 24' are stacked such that their front faces project past the front faces of the resilient components 20, 22, 20', 22'.

Resilient components 20, 22, 20', 22' may be made from any resilient material known in the art to provide impact absorption. For example, resilient components 20, 22, 20', 22' may be made from, for example, but not limited to, engineered molded rubber such as, but not limited to, styrene-butadiene rubber (SBR), neoprene rubber, butyl rubber, or natural rubber. The durometer (hardness) of resilient components 20, 22, 20', 22' can be selected and set to values within certain specifications, tested and adhered to, therefore providing the ability to accurately test and measure impact absorption and allow manufacture to exact specifications. For example, the durometer of resilient components 20, 22, 20', 22' may be selected and set to, for example, but not limited to, between about 40 to about 120 shore and between about 70 to about 100 shore. Abrasion-resistant components 24, 24' may be made from any abrasion- or wear-resistant material known to persons skilled in this art to provide abrasion- or wear-resistance. For example, abrasion-resistant components 24, 24' may be made from any material known to persons skilled in this art to provide more abrasion- or wear resistance than the material from which the resilient components 20, 22, 20', 22' are made, for example, but not limited to, rubber, including bias ply tire rubber material, for example, a plurality of strips or rubber pads of bias ply rubber material, for example, taken from the thick tire tread, and arranged face-to-face in a stacked relationship, plastic, including but not limited to polyvinylchloride, low density polyethylene (LDPE), high-density polyethylene (HDPE), including cross-linked polyethylene, ultra-high molecular weight (UHMW) polyethylene, polyamide (Nylon™), including vinyl-impregnated polyamide, or any other high strength abrasion-resistant material, including metal, for example, but not limited to, steel. As discussed above, depending on the material from which abrasion-resistant components 24, 24' are composed, abrasion-resistant components 24, 24' may also provide impact absorption. The resilient components 20, 22, 20', 22' and abrasion-resistant components 24, 24' may be engineered, formed and molded entirely out of a block of material that is homogeneous or heterogeneous throughout or may be engineered, formed and molded in different sections or layers wherein at least one section or layer comprises a different composition of material from another layer or section. Abrasion-resistant components 24, 24' may function as wear-indicator strips indicating the degree of wear of the bumper 10 and when to replace the bumper 10, or various components of the bumper 10, including resilient components 20, 22, 20', 22' and abrasion-resistant components 24, 24', when worn.

The bumper 10 is held together via tie rods 16, fitting through apertures (not shown) in the brackets 12, 12', and slotted apertures 26, 26' in the abrasion-resistant components 24, 24', slotted apertures 27, 27' in the side resilient components 20, 20' and slotted apertures 28, 28' in the center resilient components 22, 22'. Tie rods 16 may be threaded and fixed by nuts 18, or by other fixing means.

In this embodiment, the side brackets 12, 12'are angled, i.e., in the form of angle irons, so that one surface (the mounting surface) is mounted against a supporting wall of a loading dock (not shown) by bolts (not shown) through holes 14 or by welding the side brackets 12, 12' to the loading dock, or by other securing means. The other surface (the abutting surface) of the angled side brackets 12, 12', which is normal to the mounting surface and supporting wall, abuts the outer sides of the shortened portions or flanges of the side resilient components 20, 20' and the outer sides of the abrasion-resistant components 24, 24'. Side brackets 12, 12' have apertures (not shown) through which tie rods 16 fit. Side brackets 12, 12' are rigid and may be made from any rigid material known in the art, for example, but not limited to, metal, such as, but not limited to steel. In another embodiment, the side brackets 12, 12' may be in the form of flat plates that abut the sides of the stacked bumper 10, which rear edges of the plates can be welded to the curb angle of the loading dock or to a metal mounting plate, if available. In still another embodiment, the side brackets 12, 12' may be in the form of a single substantially U-shaped plate having a substantially flat rear plate (the mounting surface) for mounting against a supporting wall of a loading dock and a side plate (abutting surface) at each end of the rear plate which is normal to the rear plate for abutting the sides of the stacked bumper 10.

Figure 8 shows a perspective view of the side resilient component 20 (identical to 20') which, in this embodiment, is substantially J-shaped, having an elongated portion and a shortened portion or flange extending out from the side of the elongated portion at one end thereof. The side resilient component 20 (or 20') is abutted on the outer side of its shortened portion or flange by the abutting surface of the bracket 12 (or 12'). The abrasion-resistant component 24 (or 24') sits within the space created by the shortened portion or flange of the side resilient component 20 (or 20') between the abutting surface of the bracket 12 (or 12') and the outer side of the elongated portion of the side resilient component 20 (or 20'). When installed at a loading dock, the rear face of the side resilient component 20 (or 20') sits flush with the mounting surface of the bracket 12 (or 12') against the supporting wall of the loading dock. The shortened portion or flange of the side resilient component 20 (or 20') is molded such that the sides 34 (or 34') and 36 (or 36'), are chamfered. The chamfering in side 34 (or 34') reduces outward pressure against the abutting surface of the bracket 12 (or 12') when the bumper 10 is deformed due to compression, for example when compressed by a docking trailer. The chamfering in side 36 (or 36') creates a notch or gap between the shortened portion or flange and the elongated portion of side resilient component 20 (or 20'), thus creating it's substantially J-shape. The chamfering in sides 34 (or 34') and 36 (or 36') also reduces cutting, splitting or breakage that may otherwise be experienced by the shortened portion or flange of side resilient component 20 (or 20') when the abrasion-resistant component 24 (or 24'), which sits on top of the shortened portion or flange of the side resilient component 20 (or 20'), is compressed by a docking trailer. The side resilient component 20 may be used on either side of the bumper 10, such as, for example, as side resilient component 20', simply by rotating the component.

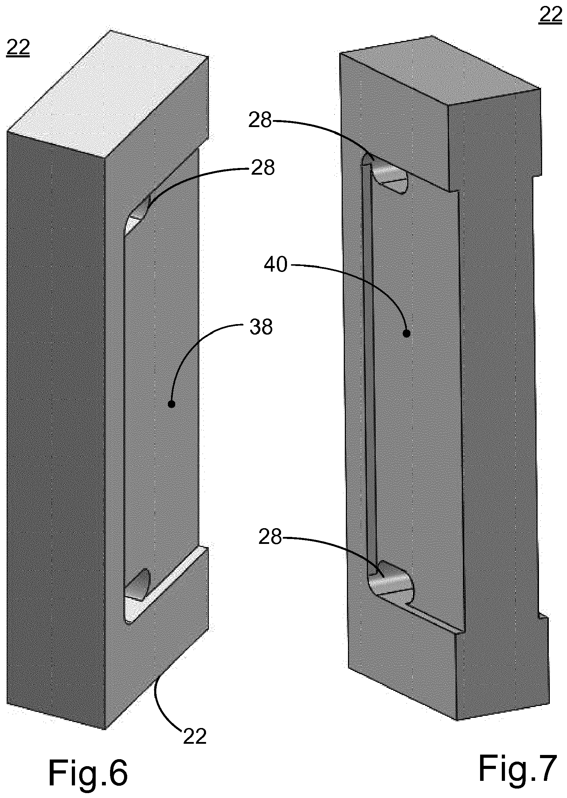

In this embodiment, side resilient component 20 (or 20') has a slotted aperture 27 (or 27') aligning with the slotted aperture 26 (or 26') of the abrasion-resistant component 24 (or 24') and through which tie rods 16 fit. Recess 32 (or 32') is molded into the side resilient components 20 (or 20') on the outside surface of the elongated portion. The recess 32 (or 32') aligns with recess 38 (or 38') in center resilient component 22 (or 22'), shown in Figures 6 and 7. When stacked together, the recess 32 (or 32') of side resilient component 20 (or 20') and the recess 38 (or 38') of the center resilient component 22 (or 22') form niche 23 (or 23') shown in Figure 2. This niche 23 (or 23') reduces pressure against the abutting surface of the bracket 12 (or 12') when the loading dock bumper 10 is compressed by a docking trailer. In another embodiment, side resilient components 20, 20' do not comprise recesses 32, 32'.

As discussed above, in another embodiment, side resilient components 20, 20' may be substantially L-shaped rather than substantially J-shaped, i.e., not comprising notches or gaps between the shortened portions or flanges and the elongated portions and as such, not having sides 36, 36'.

Figure 6 shows a front right-hand perspective view of the center resilient component 22 (identical to 22'). Figure 7 shows an inverted rear left-hand perspective view of center resilient component 22 (identical to 22'). In this embodiment, center resilient component 22 (or 22') is symmetrical, on the right-hand and left-hand sides. Center resilient component 22 (or 22') has symmetrical and substantially similarly shaped recesses 38 (or 38'), 40 (40') on either side. As discussed above, when stacked together, the recess 38 (or 38') of the center resilient component 22 (or 22') and the recess 32 (or 32') of the side resilient component 20 (or 20') form niche 23 (or 23') as shown in Figure 2. Likewise, when stacked together, center resilient components 22 and 22' abut each other and their recesses 40 and 38', respectively, align to form niche 25 shown in Figure 2. As with niche 23 (or 23'), niche 25 (or 25') reduces pressure against the abutting surface of the bracket 12 (or 12') when the loading dock bumper 10 is compressed by a docking trailer. In another embodiment, center resilient components 22, 22' do not comprise recesses 38, 40, 38' and 40', respectively. In the embodiment wherein side resilient components 20, 20' do not comprise recesses 32, 32' and center resilient components 22, 22' do not comprise recesses 38, 40, 38' and 40', respectively, niches 23, 25, 23', 25' are not present.

The center resilient component 22 has slotted apertures 28 which align with the slotted apertures 27 of the side resilient component 20 and the slotted apertures 28' of the center resilient component 22', and through which tie rods 16 fit. Likewise, the center resilient component 22' has slotted apertures 28' which align with the slotted apertures 27' of the side resilient component 20' and the slotted apertures 28 of the center resilient component 22, and through which tie rods 16 fit. The slotted apertures 26, 26', 27, 27', 28, 28' are slotted to prevent pressure or impact forces from being applied to the tie rods 16 when the dock bumper 10 is compressed by a docking trailer, thereby preventing damage to the tie rods 16.

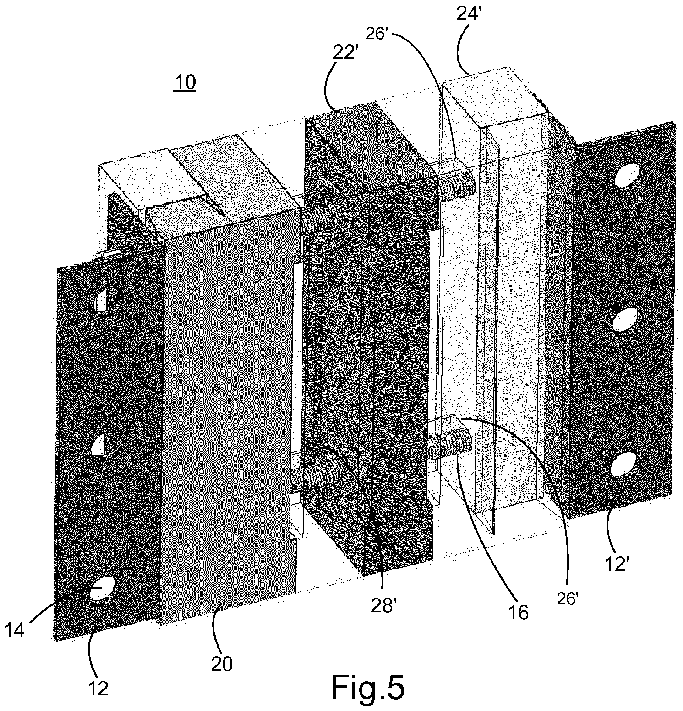

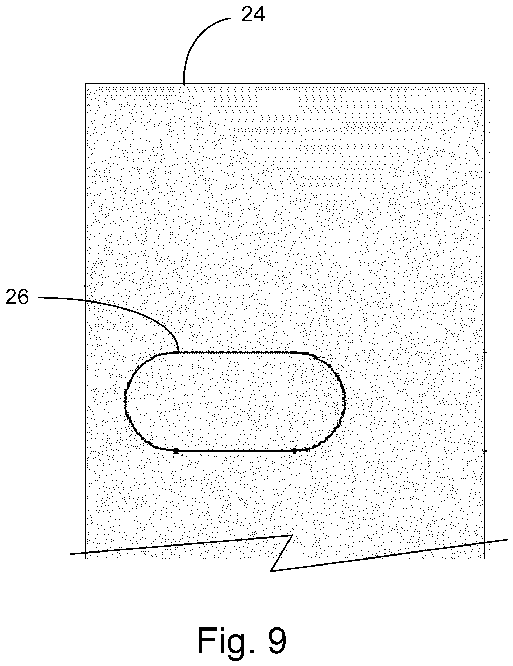

Figure 9 shows a partial side view of the abrasion-resistant component 24 (identical to 24'). In this embodiment, abrasion-resistant components 24, 24' are substantially square cuboid shaped and abut, on one side thereof, against the abutting surface of the side brackets 12, 12', respectively and, on the other side thereof, against the side resilient components 20, 20', respectively. Abrasion-resistant components 24, 24' protrude past the outer edges of the abutting surfaces of the side brackets 12, 12', respectively, past the outer faces of the elongated portions of the side resilient components 20, 20', respectively, and past the outer faces of the center resilient components 22, 22', respectively, as seen in Figure 1. This protrusion protects the side resilient components 20, 20' and the center resilient components 22, 22' from wear, since the abrasion-resistant components 24, 24' are made from an abrasion-resistant material. Abrasion-resistant component 24' (and 24) has slotted apertures 26' (and 26), shown in Figure 5, where side resilient component 20' is cutaway, and in greater detail for abrasion-resistant component 24 with slotted aperture 26, as shown in Figure 9. Slotted apertures 26, 26' align with the apertures of the side brackets 12, 12', respectively and through which tie rods 16 fit. Other means of fastening the abrasion-resistant components 24, 24' to bumper 10 that allow it to be easily replaced are possible.

The abrasion-resistant components 24, 24' may be a different color from the rest of the components of the dock bumper 10 to provide a visual indicator of when the abrasion-resistant components 24, 24' become worn and need to be replaced and/or when other components of the dock bumper 10 need to be replaced. The differing color of the abrasion-resistant components 24, 24', may also serve as a visual aiming aid for drivers, being, for example, but not limited to, a bright yellow color and/or reflective.

In another embodiment, the abrasion-resistant components 24, 24' can be used to activate a proximity switch (not shown) set behind the material to identify when a trailer is docked or has departed. The proximity switch may also be used to activate another mechanism, such as opening of doors or activating a dock leveler when the trailer is in place.

Because all of the modular resilient components 20, 20', 22, 22' and the abrasion-resistant components 24, 24' are substantially symmetrical, they can be used on either the right-hand side or the left-hand side of the modular dock bumper 10. Since this embodiment of the modular dock bumper 10 only requires two molded resilient components, i.e., the side resilient component 20 (which can also be used as side resilient component 20') and the center resilient component 22 (which can also be used as center resilient component 22'), and one molded abrasion-resistant component 24 (which can also be used as abrasion-resistant component 24'), the bumper 10 is easier to assemble than prior art loading dock bumpers and less inventory and less equipment are required to produce the bumper 10 compared to that required to produce prior art loading dock bumpers. It is also with relative ease that the modular resilient components 20, 20', 22, 22' and the abrasion-resistant components 24, 24' can be produced in a variety of different sizes, shapes and configurations to produce bumper 10 in a variety of different sizes, shapes and configurations.

In another embodiment (not shown) the upper end of the front ends of the elongated portions of the side resilient components 20, 20', of the center resilient components 22, 22' and the abrasion-resistant components 24, 24', may be provided with a chamfer at, for example, but not limited to, 45°. Such chamfer reduces or eliminates the tendency of a truck bumper to ride up on the dock bumper and to become lodged, sometimes making it difficult to drive the truck away from the loading dock. To maintain the symmetry of side resilient components 20, 20', center resilient components and abrasion-resistant components 24, 24', such that they can be reversible, rotatable and/or invertible, such a chamfer can be provided on both the upper and lower ends of the front ends of the elongated portions of the side resilient components 20, 20', on the upper and lower ends of both the front and rear ends of the center resilient components 22, 22', and on the upper and lower ends of the front and rear ends and of the left- and right-hand sides of the abrasion-resistant components 24, 24'.

In operation, when a vehicle, such as a truck, has to be loaded and/or unloaded, it is driven in a rearward direction to the loading dock. The rear of the vehicle first makes contact with the abrasion-resistant components 24, 24', which front faces project out past the front faces of the other components of bumper 10. The force of the impact is transferred from the abrasion-resistant components 24, 24' to the shortened portions or flanges of the side resilient components 20, 20'. The shortened portions or flanges of the side resilient components 20, 20' are compressed, absorbing some of the impact, and cause the abrasion-resistant components 24, 24' to move backwards toward the loading dock until the front faces of the abrasion-resistant components 24, 24' become flush with the front faces of the elongated portions of side resilient components 20, 20' and the front faces of the center resilient components 22, 22'. As discussed above, depending on the material from which the abrasion-resistant components 24, 24' are composed, these components may also absorb some of the impact. When the rear of the vehicle makes contact with the and the rear of the vehicle makes contact with the front faces of the elongated portions of side resilient components 20, 20' and the front faces of the center resilient components 22, 22', the elongated portions of side resilient components 20, 20' and the center resilient components 22, 22' are compressed, absorbing the rest of the impact. After the impact, the resilient nature of the resilient components 20, 20', 22, 22' return these components, as well as the abrasion-resistant components 24, 24' to their pre-impact resting state, i.e., with the front faces of the abrasion-resistant components 24, 24' projecting out past the front faces of the elongated portions of the side resilient components 20, 20' and the front faces of the center resilient components 22, 22'. Once the vehicle is parked at the loading dock, the rear of vehicle continues to make contact with the front faces of the abrasion-resistant components 24, 24', but not with the front faces of the elongated portions of the side resilient components 20, 20' and the front faces of the center resilient components 22, 22'. When the vehicle is loaded and/or unloaded and a forklift drives in and out of the vehicle, the vehicle pitches and rolls moving up and down and side to side and combinations thereof and as such, the rear of the vehicle likewise rubs up and down and side to side and combinations thereof against with front faces of the abrasion-resistant components 24, 24'. The abrasion-resistant material of the abrasion-resistant components 24, 24' resists wear from the rubbing of the rear of the vehicle there against and protects the front faces of the elongated portions of side resilient components 20, 20' and the front faces of the center resilient components 22, 22' from wear.

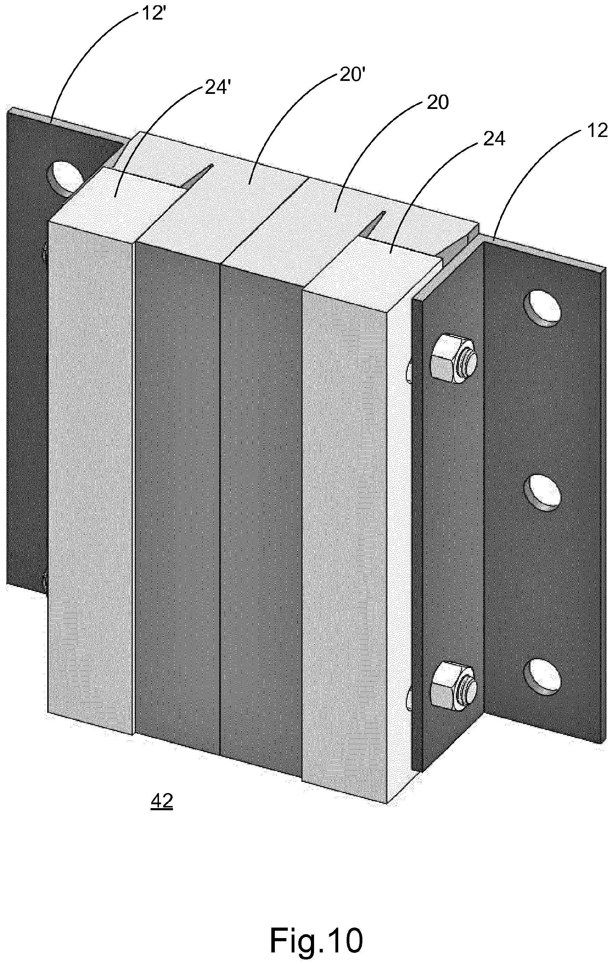

Other arrangements of the modular side resilient components 20, 20', 22, 22' and the abrasion-resistant components 24, 24' into loading bumper 10 may be made for various situations. For example, Figure 10 shows another embodiment of a modular loading dock bumper 42 in accordance with the present invention. In this embodiment, the dock bumper 42 does not have any center resilient components 22, 22', but instead has two side resilient components 20, 20' directly abutting each other, making for a smaller sized bumper than that shown in Figure 1.

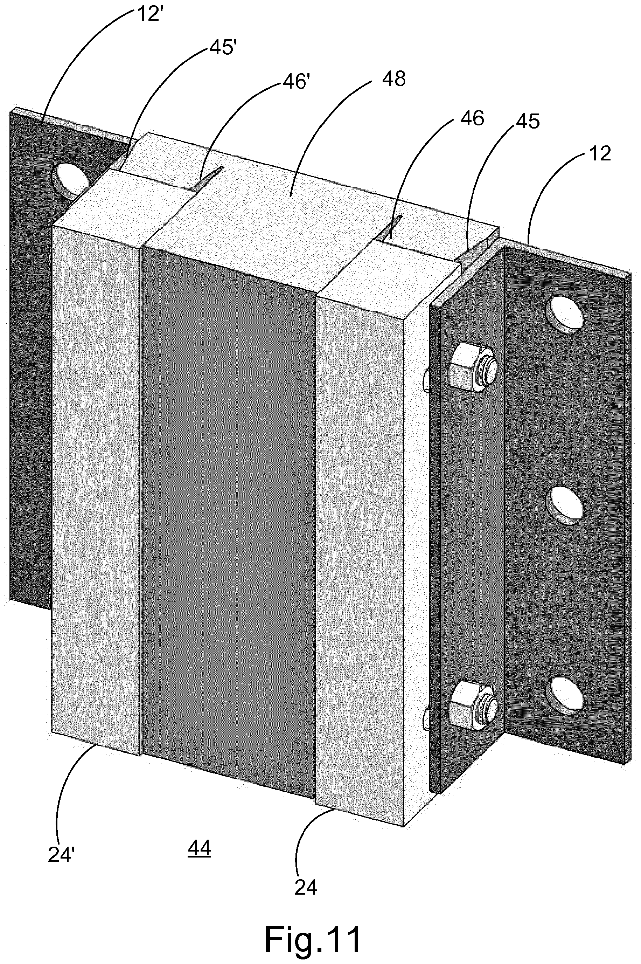

Figure 11 shows another embodiment of a modular dock bumper 44 in accordance with the present invention which also does not have any center resilient components 22, 22', but instead combines, for example, two side resilient components 20, 20' into a single resilient component 48. In this embodiment, two substantially J-shaped side resilient components 20, 20' are combined into a single substantially T-shaped component 48. As in the embodiments comprising two substantially J-shaped components 20, 20', the abrasion-resistant components 24, 24' sit on top of the shortened portions or flanges of the substantially T-shaped component 48 within the spaces created between the abutting surfaces of the side brackets 12, 12' and either side of the elongated portion of the substantially T-shaped component 48. In this case, as with the substantially J-shaped components 20, 20', the shortened portions or flanges of the substantially T-shaped component 48 are molded such that sides 45, 45' that abut the abutting surface of the side brackets 12, 12', respectively are chamfered. Sides 46, 46' are also chamfered forming gaps or notches between the shortened portions or flanges of the substantially T-shaped component 48 and either side of the elongated portion of the substantially T-shaped component 48. This chamfering in sides 45, 45', 46, 46' reduces outward pressure against the side brackets 12, 12' when the bumper 44 is deformed due to compression, for example when compressed by a docking trailer. The chamfering in sides 45, 45', 46, 46' also reduces breakage that otherwise may be experienced by the shortened portions or flanges of the substantially T-shaped component 48 when the abrasion-resistant components 24, 24' sitting on top of the shortened portions or flanges of the substantially T-shaped component 48, are compressed by a docking trailer. The substantially T-shaped component 48 may be molded to be any desired width to make a larger or smaller bumper 44. As with the embodiment where the side resilient components 20, 20' are substantially L-shaped rather than substantially J-shaped, in another embodiment, there are no sides 46, 46' and thus, no gaps or notches between the shortened portions or flanges of the substantially T-shaped component 48 and either side of the elongated portion. In still another embodiment, sides 45, 45' are not chamfered.

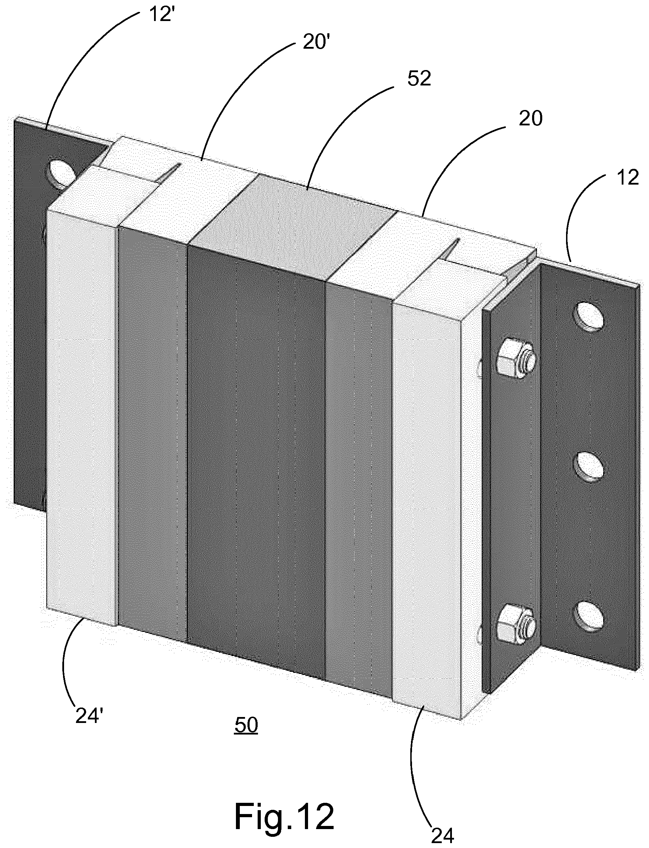

Figure 12 shows a further embodiment of a modular dock bumper 50 in accordance with the present invention. In this example, the center resilient component 52 is molded to combine two center resilient components 22, 22' into a single center resilient component 52. It should be noted that the single center resilient component 52 may be molded to be any desired width to make a larger or smaller bumper 50.

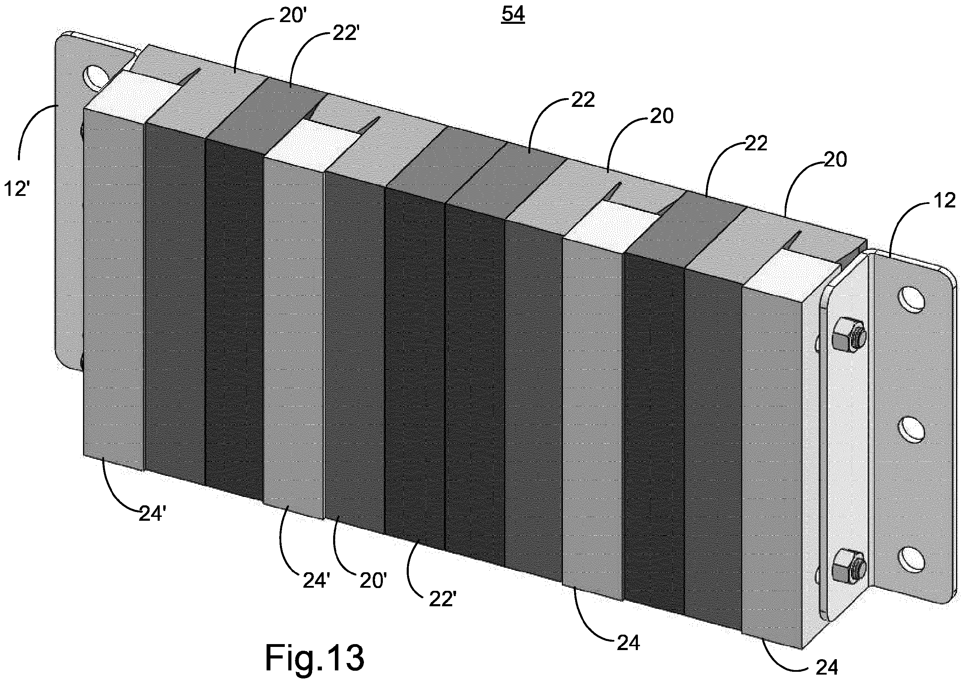

The modular dock bumper 10 may also have a plurality of center resilient components 22, 22' to make a wider bumper. As seen in Figure 13, the modular dock bumper 54 may also have a plurality of side resilient components 20, 20', center resilient components 22, 22', and abrasion-resistant components 24, 24', to make an even larger dock bumper 54. The components in this embodiment are arranged such that dock bumper 54 is bracketed by a second pair of center resilient components 22, 22', which in turn are bracketed by a second pair of side resilient components 20, 20', which house a second pair of abrasion-resistant components 24, 24'.

The embodiment of the bumper 54 shown in Figure 13 allows for the abrasion-resistant components 24, 24', which may also function as wear-indicator strips, as well as aiming devices, to be installed at various positions along the front of the bumper 54, unlike with a steel face bumper, which steel typically covers the entire front of the bumper. Being able to position the abrasion-resistant components 24, 24', and thus, wear-indicator strips, virtually anywhere along the front of the bumper 54 allows the degree of wear of the bumper to be identified (i.e., when to replace components of the bumper or the entire bumper itself), but also reduces the cost to build the bumpers since the abrasion-resistant components 24, 24', and thus wear-indicator strips, can be added where needed or where the greatest impact and/or abrasion takes place.

Figures 14, 15, and 16 show views of another embodiment of a loading dock bumper 56 in accordance with the present invention. In this embodiment, the projection of the loading dock bumper 56 is increased by the addition of supplemental component 58. Supplemental component 58 may be made from, for example, but is not limited to, molded rubber components, plastic components, metal components, for example, steel, or a combination of rubber, plastic and/or or metal. The addition of supplemental component 58 may require elongated side brackets 60, 60'. Additional holes 62 may be included in elongated side brackets 60, 60' for accommodating extra tie rods 16 to hold the loading dock bumper 56 together. Such an increase in projection of loading dock bumper 56 may be needed on decline loading dock approaches to keep trailers from contacting building walls.

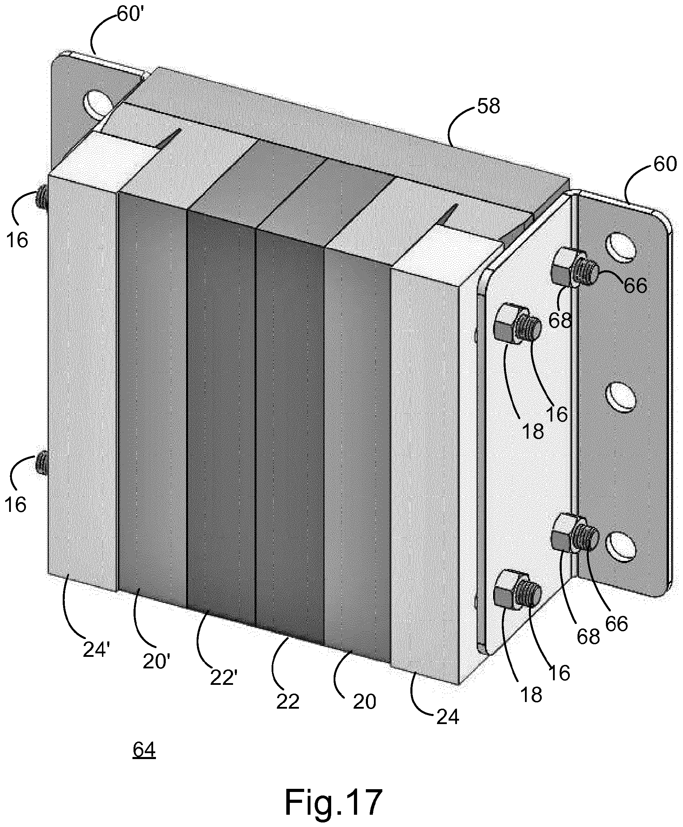

Figures 17, 18, and 19 show views of another embodiment of a loading dock bumper 64 in accordance with the present invention. In this embodiment, like the embodiment of Figures 14 to 16, supplemental component 58 increases the projection of the loading dock bumper 64, which may require elongated side brackets 60, 60'. In this embodiment, tie rods 66 inserted through additional holes 62 are used to keep the loading dock bumper 64 in place. Tie rods 66 may be threaded and fixed by nuts 68 or by other fixing means. Supplemental component 58 may require elongated slots (not shown) like those shown in side resilient components 20, 20', center resilient components 22, 22' and abrasion-resistant components 24, 24', to accommodate the tie rods 66.

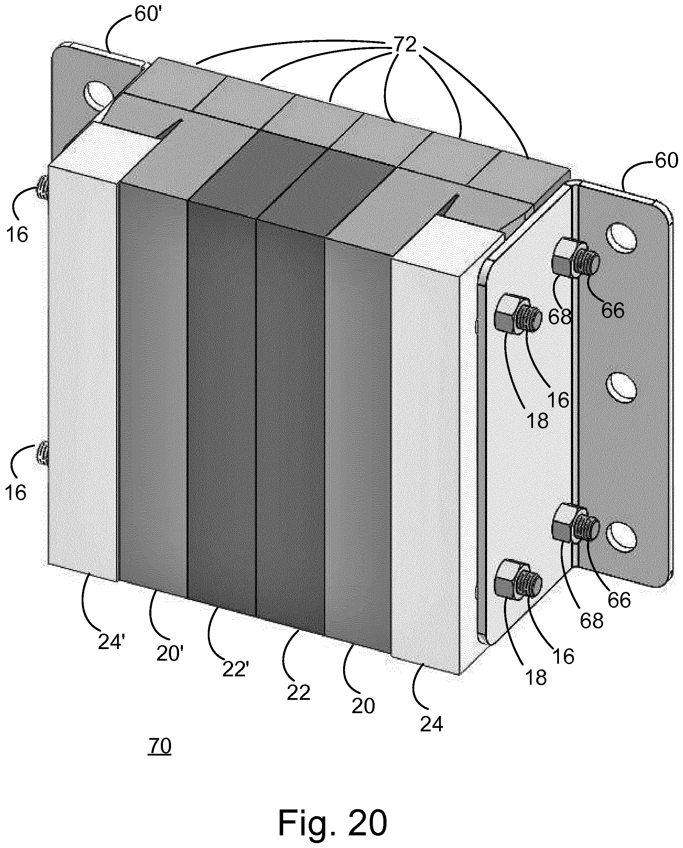

Figures 20, 21, and 22 show views of another embodiment of a loading dock bumper 70 in accordance with the present invention. In this embodiment, the projection of loading dock bumper 70 is increased by the addition of a plurality supplemental components 72. Using a plurality of supplemental components 72 allows for flexibility in making the dock bumper 70 with a varying depth of projection and with varying widths. The plurality of supplemental components 72 may be made from, but is not limited to, molded rubber components, plastic components, metal components, for example, but not limited to, steel, or a combination of rubber, plastic and/or metal. The addition of the plurality of supplemental components 72 requires the elongated side brackets 60, 60'. Additional holes 62 are included in elongated side brackets 60, 60' for extra tie rods 66 to hold the loading dock bumper 56 together. The plurality of supplemental components 72 may comprise elongated slots (not shown) like those shown in side resilient components 20, 20', center resilient components 22, 22' and abrasion-resistant components 24, 24', to accommodate the tie rods 66.

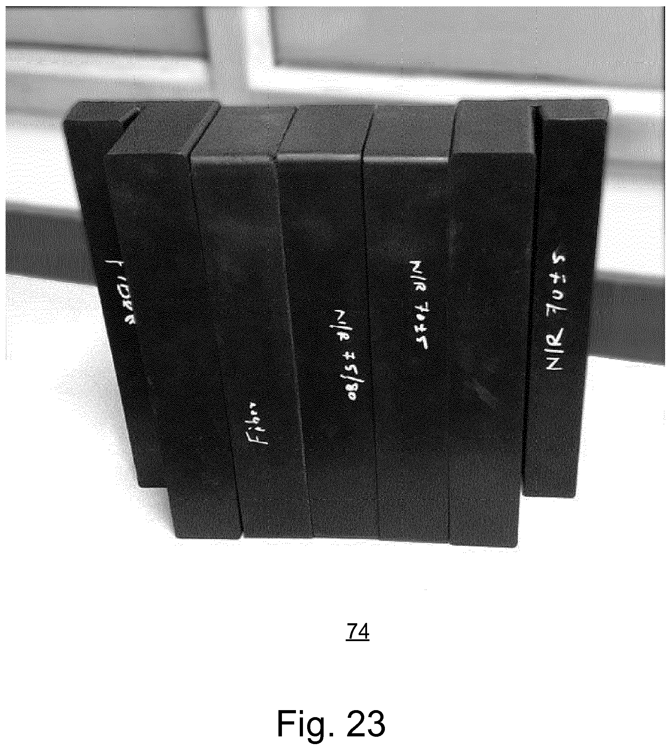

Figure 23 shows a photograph of another embodiment of a loading dock bumper 74 in accordance with the present invention. Figures, 24, 25, and 26 show more views of this embodiment of loading dock bumper 74. In this embodiment, side brackets are not required and only side resilient components 76, 76' and center resilient components 22, 22' are used. The bumper 74 is held together via tie rods 16 (not shown) fitted through slotted apertures 27, 27' in the side resilient components 76, 76' and slotted apertures 28, 28' (not shown) in the center resilient components 22, 22'. Tie rods 16 may be threaded and fixed by nuts 18 (not shown), or by other fixing means. The side resilient components 76, 76' have holes (not visible) in the shortened portions or flanges that allow the loading dock bumper 74 to be fastened to a surface with anchors 78. The anchors 78 rest on the shortened portions or flanges of side resilient components 76, 76' atop washers 80. Anchors 78 may be threaded and fixed by nuts 82 or by other fixing means. Alternatively, loading dock bumper 74 may be welded to the curb angle of the loading dock or to a mounting plate, if available, using weld studs and bolts or similar. As in other embodiments disclosed herein, although side resilient components 76, 76' in this embodiment are shown being substantially J-shaped, side resilient components 76, 76' may also be substantially L-shaped, i.e., no gaps or notches between the shortened portions or flanges and elongated portions of side resilient components 76, 76'. Also, as with the other embodiments disclosed herein, loading dock bumper 74 may not comprise any center resilient components 22, 22', center components 22, 22' may be combined into a single center component and/or side resilient components 76, 76' may be combined into a single T-shaped side resilient component.

In another embodiment (not shown), abrasion-resistant components 24, 24' may be incorporated into bumper 74. In such an embodiment, abrasion-resistant components 24, 24' sit on top of the shortened portions or flanges of side resilient components 76, 76', respectively and fit within the spaces created between the elongated portions of side resilient components 76, 76' and the outer facing sides of the shortened portions or flanges of side resilient components 76, 76', respectively; the sides of the abrasion-resistant components 24, 24' abutting the sides of the elongated portions of side resilient components 76, 76', respectively on one side. Abrasion-resistant components 24, 24' are stacked such that their front faces project past the front faces of the resilient components 76, 22, 76', 22'. In this embodiment, tie rods 16 would also fit through apertures 26, 26', in one embodiment, slotted apertures, in the abrasion-resistant components 24, 24' thereby connecting abrasion-resistant components 24, 24' to the pair of side resilient components 76, 76'. In an embodiment, abrasion-resistant components 24, 24' have counter-sunk holes in the front faces thereof extending through the components that would mate with the holes in the shortened portions or flanges of the side resilient components 76, 76' and longer anchors 78 would rest within the counter-sunk holes in the abrasion-resistant components 24, 24' atop washers.

The present invention may be further defined with reference to the following clauses:
Clause 1: A loading dock bumper comprising: a pair of side resilient components, each comprising an elongated portion comprising at least an outer face and an inner face, and a shortened portion or flange extending out from the outer face of the elongated portion; a pair of side brackets, each comprising a first surface and a second surface, the first surface for attaching to a supporting surface, the second surface for abutting the shortened portion of each side resilient component; a pair of abrasion-resistant components shaped to fit within each space created between each second surface and each shortened portion or flange of each side resilient component; and at least one connecting member extending through at least one aperture in each of the pair of side brackets, the pair of side resilient components, and the abrasion-resistant components, thereby connecting and retaining the arranged pair of side resilient components, and the abrasion-resistant components, to the pair of side brackets as an integral unit.
Clause 2: The dock bumper of Clause 1, wherein the side resilient components are symmetrical in a vertical direction, allowing them to be invertible.
Clause 3: The dock bumper of Clause 1 or 2, wherein the abrasion-resistant components are symmetrical in a vertical direction, allowing them to be invertible and are symmetrical in the horizontal direction, allowing them to be rotatable by 90°.
Clause 4: The dock bumper of any one of Clauses 1 to 3, wherein the side resilient components are substantially L-shaped.
Clause 5: The dock bumper of any one of Clauses 1 to 3, wherein the shortened portions or flanges of each of the side resilient components have an outer chamfered face and an inner chamfered face.
Clause 6: The dock bumper of Clause 5, wherein the side resilient components are substantially J-shaped.
Clause 7: The dock bumper of any one of Clauses 1 to 6, wherein the pair of side resilient components are combined into a single side resilient component.
Clause 8: The dock bumper of Clause 7, wherein the single side resilient component is substantially T-shaped.
Clause 9: The dock bumper of any one of Clauses 1 to 8, wherein the at least one aperture in each of the pair of side resilient components and the abrasion-resistant components is slotted.
Clause 10: The dock bumper of any one of Clauses 1 to 9 further comprising at least one supplemental component arranged between the supporting surface and the side resilient components.
Clause 11: The dock bumper of Clause 10, wherein the at least one supplemental component is a plurality of supplemental components.
Clause 12: The dock bumper of Clause 10 or 11, wherein the at least one supplemental component has at least one aperture, preferably at least one slotted aperture, to accommodate the at least one connecting member.
Clause 13: The dock bumper of any one of Clauses 1 to 7, further comprising at least one center resilient component comprising at least two faces, the at least one center resilient component arranged between the pair of side resilient components such that each face of the at least one center resilient component abuts the outer face of the elongated portion of each side resilient component and wherein the at least one connecting member extends through at least one aperture in the at least one center resilient component, thereby connecting the at least one center resilient component to the pair of side brackets.
Clause 14: The dock bumper of Clause 13, wherein recesses are formed in each of the inner faces of the pair of side resilient components and the at least two faces of the at least one center resilient component, such that when the at least one center resilient component abuts each of the pair of side resilient components, the recesses are aligned.
Clause 15: The dock bumper of Clause 13 or 14, wherein the at least one center resilient component is a plurality of center resilient components stacked face-to-face.
Clause 16: The dock bumper of any one of Clauses 13 to 15, wherein the at least one center resilient component is a first pair of center resilient components.
Clause 17: The dock bumper of Clause 16 further comprising a second pair of side resilient components arranged between the first pair of center resilient components and a second pair of abrasion-resistant components arranged to fit within each space created between the each of the first pair of center resilient components and each outer face of the elongated portion of each of the second pair of side resilient components, preferably wherein the at least one connecting member extends through at least one aperture in each of the second pair of side resilient components and at least one aperture in each of the second pair of abrasion-resistant components.
Clause 18: The dock bumper of Clause 17 further comprising a second pair of center resilient components arranged between the second pair of side resilient components, preferably wherein the at least one connecting member extends through at least one aperture in each of the second pair of center resilient components.
Clause 19: The dock bumper of any one of Clauses 13 to 18, wherein the at least one center resilient component is symmetrical in a vertical direction, allowing it to be invertible and is symmetrical in the horizontal direction, allowing it to be rotatable by 180°.
Clause 20: The dock bumper of any one of Clauses 13 to 19, wherein the apertures in the side resilient components, the at least one center resilient component, and the abrasion-resistant components are slotted.
Clause 21: The dock bumper of any one of Clauses 13 to 20 further comprising at least one supplemental component arranged between the supporting surface and the side resilient components and the at least one center resilient component.
Clause 22: The dock bumper of Clause 21, wherein the at least one supplemental component is a plurality of supplemental components.
Clause 23: The dock bumper of Clause 21 or 22, wherein the at least one supplemental component has at least one aperture, preferably at least one slotted aperture, to accommodate the at least one connecting member.
Clause 24: The dock bumper of any one of Clauses 1 to 12, wherein the side resilient components are molded from molded rubber.
Clause 25: The dock bumper of any one of Clauses 13 to 23, wherein the side resilient components and the at least one center resilient component are made from molded rubber.
Clause 26: The dock bumper of any one of Clauses 21 to 23, wherein the side resilient components, the at least one center resilient component and the at least one supplemental component are made from molded rubber.
Clause 27: The dock bumper of any one of Clauses 24 to 26, wherein the molded rubber is selected from the group consisting of styrene-butadiene rubber, neoprene rubber, butyl rubber, and natural rubber.
Clause 28: The dock bumper of any one of Clauses 1 to 27, wherein the abrasion-resistant components are made from high strength abrasion-resistant material.
Clause 29: The dock bumper of Clause 28, wherein the high strength abrasion-resistant material is selected from the group consisting of rubber, preferably bias ply tire rubber, plastic, preferably polyvinylchloride, polyethylene and polyamide (Nylon™) and metal, preferably steel.
Clause 30: The dock bumper of Clause 29, wherein the polyethylene is selected from the group consisting of low density polyethylene (LDPE), high-density polyethylene (HDPE), cross-linked polyethylene and ultra-high molecular weight (UHMW) polyethylene and the polyamide is vinyl-impregnated polyamide.
Clause 31: The dock bumper of any one of Clauses 1 to 30, wherein the pair of side brackets are made from steel.
Clause 32: A loading dock bumper comprising a pair of side resilient components, each comprising an elongated portion comprising at least an outer face and an inner face, and a shortened portion or flange extending out from the outer face of the elongated portion, the shortened portion or flange for directly or indirectly attaching to a supporting surface and at least one connecting member extending through at least one aperture in each of the pair of side resilient components, thereby connecting and retaining the arranged pair of side resilient components as an integral unit.
Clause 33: The dock bumper of Clause 32, wherein the side resilient components are symmetrical in a vertical direction, allowing them to be invertible.
Clause 34: The dock bumper of Clause 32 or 33, wherein the side resilient components are substantially L-shaped.
Clause 35: The dock bumper of Clause 32 or 33, wherein the shortened portions or flanges of each of the side resilient components have an outer chamfered face and an inner chamfered face.
Clause 36: The dock bumper of Clause 35, wherein the side resilient components are substantially J-shaped.
Clause 37: The dock bumper of any one of Clauses 32 to 36, wherein the pair of side resilient components are combined into a single side resilient component.
Clause 38: The dock bumper of Clause 37 wherein the pair of substantially J-shaped components are combined into a single substantially T-shaped component.
Clause 39: The dock bumper of any one of Clauses 32 to 38, wherein the at least one aperture in each of the pair of side resilient components is slotted.
Clause 40: The dock bumper of any one of Clauses 32 to 39, further comprising at least one supplemental component arranged between the supporting surface and the side resilient components.
Clause 41: The dock bumper of Clause 40, wherein the at least one supplemental component is a plurality of supplemental components.
Clause 42: The dock bumper of Clause 40 or 41, wherein the at least one supplemental component has at least one aperture, preferably at least one slotted aperture, to accommodate the at least one connecting member.
Clause 43: The dock bumper of any one of Clauses 32 to 36, further comprising at least one center resilient component comprising at least two faces, the at least one center resilient component arranged between the pair of side resilient components such that each face of the at least one center resilient component abuts the outer face of the elongated portion of each side resilient component and wherein the at least one connecting member extends through at least one aperture in the at least one center resilient component, thereby connecting the at least one center resilient component to the pair of side resilient components.
Clause 44: The dock bumper of Clause 43, wherein recesses are formed in each of the inner faces of the pair of side resilient components and the at least two faces of the at least one center resilient component, such that when the at least one center resilient component abuts each of the pair of side resilient components, the recesses are aligned.
Clause 45: The dock bumper of Clause 43 or 44, wherein the at least one center resilient component is a plurality of center resilient components stacked face-to-face.
Clause 46: The dock bumper of any one of Clauses 43 to 45, wherein the at least one center resilient component is a first pair of center resilient components.
Clause 47: The dock bumper of any one of Clauses 43 to 46, wherein the at least one center resilient component is symmetrical in a vertical direction, allowing it to be invertible and is symmetrical in the horizontal direction, allowing it to be rotatable by 180°.
Clause 48: The dock bumper of any one of Clauses 43 to 47, wherein the apertures in the side resilient components and the at least one center resilient component are slotted.
Clause 49: The dock bumper of any one of Clauses 43 to 48 further comprising at least one supplemental component arranged between the supporting surface and the side resilient components and the at least one center resilient component.
Clause 50: The dock bumper of Clause 49, wherein the at least one supplemental component is a plurality of supplemental components.
Clause 51: The dock bumper of Clause 49 or 50, wherein the at least one supplemental component has at least one aperture, preferably at least one slotted aperture, to accommodate the at least one connecting member.
Clause 52: The dock bumper of any one of Clauses 32 to 51, further comprising a pair of abrasion-resistant components, each comprising at least an outer face and an inner face and arranged such that the inner face abuts the outer face of the elongated portion of each side resilient component and fits within the space created by each shortened portion or flange of each side resilient component and wherein the at least one connecting member extends through at least one aperture in the pair of abrasion-resistant components, thereby connecting the pair of abrasion-resistant components to the pair of side resilient components.
Clause 53: The dock bumper of Clause 52, wherein the abrasion-resistant components are symmetrical in a vertical direction, allowing them to be invertible and are symmetrical in the horizontal direction, allowing them to be rotatable by 90°.
Clause 54: The dock bumper of Clause 52 or 53, wherein the at least one aperture in the pair of abrasion-resistant components is slotted.
Clause 55: The dock bumper of any one of Clauses 52 to 54, further comprising a second pair of side resilient components arranged between the first pair of center resilient components and a second pair of abrasion-resistant components arranged to fit within each space created between the each of the first pair of center resilient components and each outer face of the elongated portion of each of the second pair of side resilient components.
Clause 56: The dock bumper of Clause 55, further comprising a second pair of center resilient components arranged between the second pair of side resilient components.
Clause 57: The dock bumper of any one of Clauses 32 to 39, wherein the side resilient components are molded from molded rubber.
Clause 58: The dock bumper of any one of Clauses 40 to 42, wherein the side resilient components and the at least one supplemental component are made from molded rubber.
Clause 59: The dock bumper of any one of Clauses 43 to 48, wherein the side resilient components, the at least one center resilient component are made from molded rubber.
Clause 60: The dock bumper of any one of Clauses 49 to 51, wherein the side resilient components, the at least one center resilient component and the at least one supplemental component are made from molded rubber.
Clause 61: The dock bumper of any one of Clauses 52 to 56, wherein the side resilient components, the at least one center resilient component and the at least one supplemental component are made from molded rubber.
Clause 62: The dock bumper of any one of Clauses 57 to 61, wherein the molded rubber is selected from the group consisting of styrene-butadiene rubber, neoprene rubber, butyl rubber, and natural rubber.
Clause 63: The dock bumper of any one of Clauses 52 to 62, wherein the pair of abrasion-resistant components are made from high strength abrasion-resistant material.
Clause 64: The dock bumper of Clause 63, wherein the high strength abrasion-resistant material is selected from the group consisting of rubber, preferably bias ply tire rubber, plastic, preferably polyvinylchloride, polyethylene and polyamide (Nylon™) and metal, preferably steel.
Clause 65: Thock bumper of Clause 64, wherein the polyethylene is selected from the group consisting of low density polyethylene (LDPE), high-density polyethylene (HDPE), cross-linked polyethylene and ultra-high molecular weight (UHMW) polyethylene and the polyamide is vinyl-impregnated polyamide.
Clause 66: The dock bumper of any one of Clauses 32 to 65 wherein the shortened portion or flange of each elongated portion comprises apertures for receiving anchors therethrough for directly attaching the bumper to the supporting surface.
Clause 67: The dock bumper of any one of Clauses 32 to 65, further comprising a pair of side brackets, each comprising a first surface and a second surface, the first surface for attaching to the supporting surface and for indirectly attaching the bumper to the supporting surface, the second surface for abutting the shortened portion or flange of each of the pair of side resilient components.

While the Applicant's teachings have been described in conjunction with various embodiments and examples, it is not intended that the applicant's teachings be limited to such embodiments or examples. On the contrary, the Applicant's teachings encompass various alternatives, modifications, and equivalents, as will be appreciated by those of skill in the art, and all such modifications or variations are believed to be within the sphere and scope of the invention.

## Claims

1. A loading dock bumper comprising a pair of side resilient components, each comprising an elongated portion comprising at least an outer face and an inner face, and a shortened portion or flange extending out from the outer face of the elongated portion, the shortened portion or flange for directly or indirectly attaching to a supporting surface and at least one connecting member extending through at least one aperture in each of the pair of side resilient components, thereby connecting and retaining the arranged pair of side resilient components as an integral unit.

2. The dock bumper of claim 1, wherein the side resilient components are symmetrical in a vertical direction, allowing them to be invertible.

3. The dock bumper of claim 1 or 2, wherein the side resilient components are substantially L-shaped.

4. The dock bumper of claim 1 or 2, wherein the shortened portions or flanges of each of the side resilient components have an outer chamfered face and an inner chamfered face, preferably wherein the side resilient components are substantially J-shaped.

5. The dock bumper of any one of claims 1 to 4, wherein the pair of side resilient components are combined into a single side resilient component.

6. The dock bumper of any one of claims 1 to 5, further comprising at least one supplemental component arranged between the supporting surface and the side resilient components.

7. The dock bumper of any one of claims 1 to 6, further comprising at least one center resilient component comprising at least two faces, the at least one center resilient component arranged between the pair of side resilient components such that each face of the at least one center resilient component abuts the outer face of the elongated portion of each side resilient component and wherein the at least one connecting member extends through at least one aperture in the at least one center resilient component, thereby connecting the at least one center resilient component to the pair of side resilient components.

8. The dock bumper of claim 7, wherein recesses are formed in each of the inner faces of the pair of side resilient components and the at least two faces of the at least one center resilient component, such that when the at least one center resilient component abuts each of the pair of side resilient components, the recesses are aligned.

9. The dock bumper of claim 7 or 8, wherein the at least one center resilient component is symmetrical in a vertical direction, allowing it to be invertible and is symmetrical in the horizontal direction, allowing it to be rotatable by 180°.

10. The dock bumper of claim 9, wherein the side resilient components, the at least one center resilient component and the at least one supplemental component are made from molded rubber, preferably wherein the molded rubber is selected from the group consisting of styrene-butadiene rubber, neoprene rubber, butyl rubber, and natural rubber.

11. The dock bumper of any one of claims 1 to 10, further comprising a pair of abrasion-resistant components, each comprising at least an outer face and an inner face and arranged such that the inner face abuts the outer face of the elongated portion of each side resilient component and fits within the space created by each shortened portion or flange of each side resilient component and wherein the at least one connecting member extends through at least one aperture in the pair of abrasion-resistant components, thereby connecting the pair of abrasion-resistant components to the pair of side resilient components.

12. The dock bumper of claim 11, wherein the abrasion-resistant components are symmetrical in a vertical direction, allowing them to be invertible and are symmetrical in the horizontal direction, allowing them to be rotatable by 90°.

13. The dock bumper of claim 11 or 12, wherein the abrasion-resistant components are made from high strength abrasion-resistant material, preferably wherein the high strength abrasion-resistant material is selected from the group consisting of rubber, preferably bias ply tire rubber; plastic, preferably selected from the group consisting of polyvinylchloride, polyethylene and polyamide (Nylon™); and metal, preferably steel; and preferably wherein the polyethylene is selected from the group consisting of low density polyethylene (LDPE), high-density polyethylene (HDPE), cross-linked polyethylene and ultra-high molecular weight (UHMW) polyethylene and the polyamide is vinyl-impregnated polyamide.

14. The dock bumper of any one of claims 1 to 13 wherein the shortened portion or flange of each elongated portion comprises apertures for receiving anchors therethrough for directly attaching the bumper to the supporting surface.

15. The dock bumper of any one of claims 1 to 13, further comprising a pair of side brackets, each comprising a first surface and a second surface, the first surface for attaching to the supporting surface and for indirectly attaching the bumper to the supporting surface, the second surface for abutting the shortened portion or flange of each of the pair of side resilient components.
